# EUROPEAN PATENT APPLICATION

(11) **EP 4 195 330 A1**
(43) Date of publication of application: **14.06.2023**
(21) Application number: 21214166.7
(22) Date of filing: 13.12.2021
(51) Int. Cl.: H01M 4/66, H01M 6/40, H01M 4/24, H01M 4/34, H01M 50/105, H01M 50/124, H01M 10/04, H01M 6/04

(54) **BATTERY ARRANGEMENTS AND METHODS FOR FORMING BATTERY ARRANGEMENTS**

(71) Applicant: Zinergy UK Ltd., Cambridge CB4 2HY (GB)
(72) Inventor: OZGIT BUTLER, Dilek, Cambridge, CB23 8TN (GB); SPALEK, Karolina, Cambridge, CB1 3QP (GB); SACHDEV, Suchanuch, Cambridge, CB4 2WQ (GB); HIRALAL, Pritesh, 35009 Las Palmas (ES)
(74) Representative: 2SPL Patentanwälte PartG mbB

(57) **Abstract**

Various embodiments relate to a battery arrangement. The battery arrangement comprises a first layer arrangement connected to a first anode/cathode of an electrochemically active portion of the battery arrangement. The first layer arrangement comprises a metal electrode layer and a protection structure at least partially arranged between the metal electrode layer and the first anode/cathode. The electrochemically active portion further comprises an electrolytic portion between the first anode/cathode and a second anode/cathode of the electrochemically active portion.

## Description

### Technical Field

Various examples described herein relate to the field of thin film battery packages, such as battery arrangements and methods for forming battery arrangements.

### Background

The emergence of smart flexible technology such as rollup screens, wearable sensors, and medical devices has highlighted the critical need for portable and flexible energy storage devices. Flexible power devices have received a lot of attention, resulting in some remarkable flexible supercapacitors and batteries. The zinc-carbon battery is the most common primary battery on the market today because of its low internal resistance, high energy density, and non-toxicity. Lithium-ion batteries are too costly to be used in the realm of large-scale primary batteries. Several thin batteries including zinc-carbon batteries and lithium polymer batteries are available on the market. In addition, zinc-manganese dioxide batteries have been reported. The fundamental distinction between a zinc-carbon battery and a zinc-manganese dioxide battery is the electrolyte used. Zinc-carbon batteries usually consist of ammonium chloride and/or zinc chloride while zinc-manganese dioxide batteries use alkaline electrolytes such as potassium hydroxide. However, to use these batteries in applications like wireless data transmission such as in Bluetooth and wi-fi application, a much higher current is required. In addition, compatibility issues need to be tackled to be able to manufacture practical battery products.

### Summary

Various examples relate to a battery arrangement. The battery arrangement includes a first layer arrangement connected to a first anode/cathode of an electrochemically active portion of the battery arrangement. The first layer arrangement includes a metal electrode layer and a protection structure at least partially arranged between the metal electrode layer and the first anode/cathode. The electrochemically active portion further includes an electrolytic portion between the first anode/cathode and a second anode/cathode of the electrochemically active portion.

Various examples relate to method for forming a battery arrangement. The method includes forming a first layer arrangement of a battery arrangement. Forming the first layer arrangement comprises forming a protection structure on a metal electrode layer of the first layer arrangement. The method further includes forming an electrochemically active portion of the battery arrangement on the protection structure. The electrochemically active portion comprises a first anode/cathode, a second anode/cathode, and an electrolytic portion between the first anode/cathode and the second anode/cathode.

### Brief description of the Figures

Some examples of apparatuses and/or methods will be described in the following by way of example only, and with reference to the accompanying figures, in which
Fig. 1A shows a cross-sectional view of a battery arrangement;
Fig. 1B shows generated electrons travelling through a carbon current collector;
Fig. 2A shows an illustration of part of a battery arrangement with a protection structure;
Fig. 2B shows an illustration of part of a battery arrangement with conductive paths;
Fig. 2C shows an illustration of part of a battery arrangement with one or more conductive vias;
Figs. 3A and 3B show a cross-sectional view and top view of a battery arrangement including an electrically insulating portion;
Figs. 4A and 4B show a cross-sectional view and top view of a battery arrangement including a sidewall protection structure;
Fig. 5A shows a cross sectional view of a battery arrangement including a robust adhesion portion;
Fig. 5B shows a cross sectional view of a battery arrangement which may be prone to electrical shorting;
Fig. 6A shows a cross sectional view of a battery arrangement with a single-layer packaging structure;
Fig. 6B shows a cross sectional view of a battery arrangement with two single-layer packaging structures;
Fig. 7A shows a flow chart of a method for forming a battery arrangement;
Fig. 7B shows a flow chart showing more details of a method for forming a battery arrangement;
Figs. 8A to 8G show illustrations of a method for forming a battery arrangement;
Figs. 9A to 9G show illustrations of a method for forming a battery arrangement including two battery cells;
Figs. 10A to 10B show illustrations of a method for preparing battery electrodes;
Figs. 11A to 11C show illustrations of a method for preparing openings for battery cell regions;
Figs. 12A to 12 B show illustrations for forming a protection structure;
Fig. 13A shows voltage vs pulse current for various battery designs and chemistries; and
Fig. 13B shows maximum pulse current at a cut-off Voltage of 1.1V and total resistance vs type of battery.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

It will be understood that when an element is referred to as being "connected" or "coupled" to another element, the elements may be directly connected or coupled or via one or more intervening elements. When two elements A and B are combined using an 'or', this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

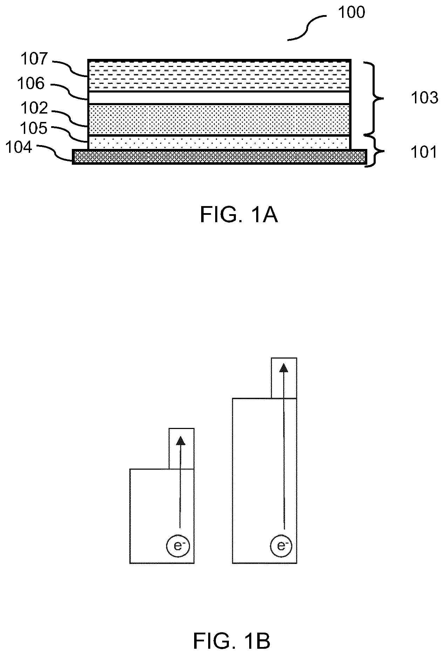

Fig. 1A shows a cross-sectional view of a battery arrangement 100 according to various embodiments.

The battery arrangement 100 includes a first layer arrangement 101 connected to a first anode/cathode 102 of an electrochemically active portion 103 of the battery arrangement 100. The first layer arrangement 101 includes a metal electrode layer 104 and a protection structure 105 at least partially arranged between the metal electrode layer 104 and the first anode/cathode 102. The electrochemically active portion 103 further includes an electrolytic portion 106 between the first anode/cathode 102 and a second anode/cathode 107 of the electrochemically active portion 103.

The battery arrangement 100 may include (or may be) a thin-film battery package. A thin-film battery arrangement 100 may be a planar (or e.g. flat) battery arrangement 100 that includes a plurality of planar layers (e.g. also referred to as films, sheets and/or foils). A planar layer (also referred to herein as a lateral layer) may have at least a first dimension (e.g. a length) and a second dimension (e.g. a breadth) that can be defined by a two-dimensional coordinate system (e.g. x-axis and y-axis). The use of "lateral" therefore describes to a direction extending substantially along an x-y plane). In addition, the planar layer may have a least a third dimension (e.g. a height or thickness), which can be defined in third direction (e.g. a z-axis). The first dimension (e.g. length) and the second dimension (e.g. breadth) of a planar layer may each be larger than the third dimension (e.g. thickness) of the planar layer (for example, but not limited to being between 1 to 1000000 times larger).

The thin-film battery arrangement 100 may be formed from a plurality of planar (x-y) layers which are stacked or layered sequentially (e.g. consecutively) in an z-direction. The planar layers may be arranged on top of each other (e.g. one above the other) on each other's planar surfaces). The battery arrangement 100 formed from the plurality of planar layers may form a planar battery package, which may also have a planar or substantially flat surface in an x-y plane and a height in the z-direction. The first dimension (e.g. length) of the battery package and the second dimension (e.g. breadth) of the battery package may each be larger than the third dimension (e.g. thickness or height) of the battery package, for example. The plurality of layers of the battery arrangement 100 may each be flexible layers, thus, the battery package may also be a flexible thin-film battery package.

The electrochemically active portion 103 of a battery arrangement, such as the battery arrangement 100 may include the first anode/cathode 102, the second anode/cathode 107, and the electrolytic portion 106 between the first anode/cathode 102 and a second anode/cathode 107. The convention of describing the electrochemically active portion as having the first anode/cathode 102, the second anode/cathode 107 and the electrolytic portion 106 means that that the electrochemically active portion 103 may include two electrodes (e.g. an anode and a cathode) and an electrolytic portion 106 between the anode and the cathode. Therefore, if one of the first anode/cathode 102 and the second anode/cathode 107 is (or functions as) an anode, then, the other of the first anode/cathode 102 and the second anode/cathode 107 is (or functions as) a cathode.

The electrolytic portion 106 may include an electrolyte and optionally a separator. Each battery arrangement may use a specific battery chemistry, (which refers to the choice of materials of the first anode/cathode 102, the second anode/cathode 107, and the electrolyte). Due to electrochemical redox reactions which occurring between the elements of the electrochemically active portion 103, an electrochemical potential may be built up between the anode and the cathode in the electrochemically active portion 103, and electrons may accumulate at the anode. At one or both sides of the anode and cathode opposite to the chemically active portion 103, a current collector may be arranged, which allows flow of electrons from the anode of the electrochemically active region 103 towards the cathode through external circuitry outside (or external to) the electrochemically active region 103. The flow of electrons through the external circuitry allows the battery arrangement 100 to power external electrical devices connected to the external circuitry between the anode and cathode of the battery arrangement 100.

Various electrochemically active systems may be applied to the battery arrangement 100. For example, the battery arrangement 100 may include (or may be) a zinc-manganese dioxide battery arrangement, a zinc- silver oxide battery arrangement, a nickel-metal-hydride battery arrangement or a zinc-carbon battery arrangement. For example, for a zinc-manganese dioxide battery arrangement, one of the first anode/cathode 102 and second anode/cathode 107 (e.g. the anode) may include or may be a zinc anode, and the other of the first anode/cathode 102 and second anode/cathode 107 (e.g. the cathode) may include or may be a manganese dioxide cathode. The electrolytic portion 106 may include an electrolyte which includes an aqueous solutions of potassium hydroxide, sodium hydroxide. Additionally, alternatively, or optionally, the battery arrangement 100 may include a zinc-silver oxide battery arrangement. For example, one of the first anode/cathode 102 and second anode/cathode 107 (e.g. the anode) may include or may be a zinc anode, and the other of the first anode/cathode 102 and second anode/cathode 107 (e.g. the cathode) may include or may be a silver oxide cathode. The electrolytic portion 106 may include an electrolyte which includes potassium hydroxide or sodium hydroxide. Additionally, alternatively, or optionally, the battery arrangement 100 may include a nickel-metal hydride battery arrangement. For example, one of the first anode/cathode 102 and second anode/cathode 107 (e.g. the cathode) may include or may be a nickel hydroxide (e.g. nickel oxyhydroxide) cathode, and the other of the first anode/cathode 102 and second anode/cathode 107 (e.g. the anode) may include or may be hydrogen, such as an interstitial metal-hydride anode. The electrolytic portion 106 may include an electrolyte which includes potassium hydroxide. Alternatively, the battery arrangement 100 may include a zinc-carbon battery arrangement. For example, one of the first anode/cathode 102 and second anode/cathode 107 (e.g. the anode) may include or may be a zinc anode, and the other of the first anode/cathode 102 and second anode/cathode 107 may include a manganese dioxide cathode. The electrolytic portion 106 may include an aqueous solution of ammonium chloride and/or zinc chloride.

As shown in Fig. 1A, the metal electrode layer 104 may be part of a layer arrangement 101, which may serve as a current collector for the first anode/cathode 102. The first anode/cathode 102 may be an anode or a cathode.

In the battery arrangement 100, the electrolyte may be chemically corrosive towards the metal electrode layer 104. The electrolyte may include acidic or alkaline electrolytes, and may be in the form of aqueous solutions or polymer gel for example, aqueous solutions of ammonium chloride and/or zinc chloride or potassium hydroxide. Optionally, the metal electrode layer 104 may be a layer which includes (optionally predominantly) copper, such as a copper layer. A battery arrangement such as zinc manganese dioxide may include alkaline and/or acidic electrolytes (aqueous solutions or polymer gel, aqueous solutions of ammonium chloride, zinc chloride and/or potassium hydroxide). These electrolytic systems may be corrosive towards the metal electrode layer 104 (for example, copper). Zinc-manganese dioxide batteries may use an ionic liquid gel electrolyte. However, ionic liquids have high viscosity and low conductivity. Moreover, ionic liquids and nickel or silver as a current collectors may lead to relatively high costs as the current collectors may be too costly for bulk production. Copper may be used as an anode current collector for lithium-ion or zinc hydroxide batteries. However, the choice of current collector materials may be limited due to corrosion of the current collector by the electrolyte.

Copper and copper alloys are extensively employed for a variety of purposes due to their low cost and corrosion resistance. Copper and copper alloys are resistant to most organic solvents, such as alcohols, aldehydes and petroleum. On the other hand, oxidizing acids, such as nitric acid, corrode copper and copper alloys quickly. Other acids' corrosion is usually reliant on the presence of oxygen or another oxidising agent in the solution. Copper and/or copper alloys are unsuitable against ammonium chloride environment. For example, they display very poor corrosion resistance against ammonium chloride. Copper and/or copper alloys may display fair corrosion resistance against zinc chloride. Copper and/or copper alloys may display better corrosion resistance against Potassium hydroxide, but may still not be suitable under most conditions of use. Hence, one or more corrosion protection layer structures may be used to prevent corrosion of the metal electrode layer 104.

If electrochemically unstable and corrosive metals (e.g. copper) are used as the metal electrode layer 104, the protection structure 105 (e.g. which may include one or more corrosion protection structures) may be needed. The various examples disclosed herein may therefore reduce or prevents chemical corrosion of the current collector 101 by corrosive electrolytes by implementing a protection structure 105, wherein at least part of the protection structure 105 may be between the metal electrode layer 104 and the electrochemically active region 103, and wherein the protection structure 105 may also form part of or function as a current collector 101. For example, copper may be electrochemically unstable and may corrode in the presence of the electrolytes from the electrolytic portion 106, which may reduce the life span of the battery. The protection structure 105 may be formed on (e.g. directly on) a surface of the metal electrode layer 104. In other words, a lateral surface of the protection structure 105 may be formed on (e.g. directly on) a lateral surface of the metal electrode layer 104. The protection structure 105 may include (or may be) a corrosion protection structure (e.g. a corrosion protection layer) for protecting the metal electrode layer 104 from corrosion by the electrolytic portion 106. For example, the corrosion protection structure may be arranged over the copper current collector to protect it from chemical corrosion. The protection structure 105 may therefore be more chemically resistant (e.g. demonstrate greater chemical resistance) towards to the electrolyte than the metal electrode layer 104.

Being able to protect easily corrodible metal electrodes from electrolyte in battery arrangements may offer several improvements over other types of battery arrangements. For example, flexible zinc-manganese dioxide battery arrangements may include a metal electrode layer 104 as a current collector (e.g. a copper current collector). The copper current collectors may be produced in a patterned fashion and may be scalable to volume production. For example, the use of metal (e.g. copper) current collectors may be suitable for roll-to-roll printing in production with a corrosion protection layer in an aqueous environment. In addition, the battery arrangements described herein may be environmentally friendly and nontoxic.

Corrosion in the thin and printed batteries presents various challenges compared to conventional cylindrical batteries. New battery design considerations for the thin and printed batteries are needed, which differ from that of conventional cylindrical batteries due to the different form factor. The total thickness of thin and printed batteries may be range from 0.3 mm to 2mm. The ratio of active material (0.1mm-0.3mm) to packaging/casing (0.05mm-0.2mm) may be 1:2 compared to 15:20 in a typical AAA battery. This allows electrolyte in traditional batteries to be stored in the active material. The active material, conductive carbon and electrolyte may be made into a paste and pressed into the casing. This minimises the electrolyte solution which interacts with the rest of the components in the battery. However, this is not the case with the printed batteries as the active material (e.g. an ink) is deposited easily on a soft flexible substrate and may require a good interlayer adhesion. To achieve this, a high binder content ink may be formulated (instead of a wet paste), printed, and dried completely. The electrolyte may be added later on in the cell in liquid or gel form which can go through the fairly thin layer of active material and react with the metal underneath (e.g. metal foils) and/or the substrate in a shorter period of time.

Copper may be a suitable base metal to form the current collector because it is the most cost effective for its conductivity. In addition, copper may be compatible with the chemistry used in the battery. In contrast to other current collectors, such as carbon current collectors, although printed carbon current collectors in flexible batteries are easy to print and stable in the battery's electrochemical setting, printed carbon is a poor conductor (sheet resistances ranging from 5 to 100 Ω/sq. The average internal resistance of printed carbon batteries is usually high compared to copper (sheet resistance is 0.5 mΩ/ sq). The effect of the carbon current collector on the resistance becomes more dominant as the size of the cell increases and the shape gets more complicated, as electrons generated must travel a further distance to be collected at the external contact as shown in Figure 1B. Fig. 1B shows electrons generated travelling through a carbon current collector. The total resistance of the system may thus be dependent on the size, shape and thickness of the carbon layer. The disadvantage associated with size dependent resistance may be eliminated by replacing the carbon layer with metal.

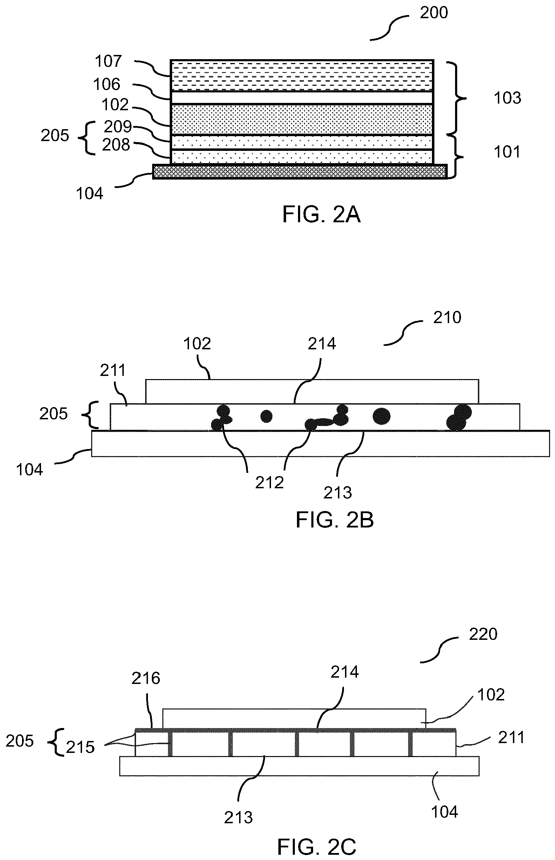

Fig. 2A shows an illustration of part of a battery arrangement 200 including a protection structure 205 formed on the metal electrode layer 104 in a battery cell region. The battery arrangement 200 may include one or more or all of the features already described in connection with Figs. 1A to 1B.

The protection structure 205 may include one or more corrosions protection layers which may function as a corrosion protection structure. For example, the protection structure 205 may include at least one layer 208 including a noble (chemically inert) metal. Alternatively or additionally, the protection structure 205 may include at least one layer 209 including carbon. Optionally, the at least one layer 208 may include predominantly the noble metal (e.g. more than 95% by volume). Optionally the at least one layer 209 may include predominantly carbon (e.g. more than 95% by volume). Optionally, the noble metal layer 208 may include (or may be) a layer including tin (e.g. a tin layer or alloys of copper, zinc and tin or alloys of copper and tin). The carbon layer 209 may include at least one of a graphite layer and a graphene layer (e.g. one or more graphite and/or graphene layers). Optionally, a tin layer 208 may be formed directly on the metal electrode layer 104. If the metal electrode layer 104 is a copper layer, the copper layer deposition process may be compatible with tin plating, for example. Additionally or optionally, the one or more carbon layers 209 may be formed on the tin layer 208. Alternatively, the one or more carbon layers 209 may be formed directly on the metal electrode layer 104. Additionally or optionally, a tin layer 208 may be formed on the one or more carbon layers 209.

Fig. 2B shows an illustration of a battery arrangement 210 including a protection structure 205 formed on the metal electrode layer 104 which may be a printed battery electrode. The battery arrangement 210 may include one or more or all of the features already described in connection with Figs. 1A to 2A.

The protection structure 205 may include a chemically resistant (binding) layer 211 and electrically conductive filler material 212 arranged at least partially in the chemically resistant layer 211. For example, the protection structure 205 may be a mixture including the electrically conductive filler material 212 arranged in the chemically resistant (binding) layer 211. The electrically conductive filler material 212 may provide one or more electrically conductive paths between the metal electrode layer 104 at the first side 213 of the chemically resistant layer 211 and the first anode/cathode 102 at a second side 214 (opposite to the first side 213) of the chemically resistant layer 211. The chemically resistant layer 211 may include (or may be) an electrically insulating layer, such as at least one of: an electrically insulating epoxy, an electrically insulating polymer, an electrically insulating resin and electrically insulating acrylic. For example, the chemically resistant layer 211 may include or may be an acrylic resins including at least one of poly(ethyl acrylate) and poly(butyl methacrylate). The chemically resistant layer 211 may be more chemically resistant towards to the electrolyte than metal electrode layer 104. Additionally or optionally, the electrically conductive filler material 212 may also be more chemically resistant towards to the electrolyte than metal electrode layer 104. The electrically conductive filler material 212 may include electrically conductive particles such as, optionally, nanoparticles. Such electrically conductive particles may include carbon filler material, such as graphene, carbon nanotubes, carbon nanostructures. Additionally, optionally or alternatively, such electrically conductive particles may include (or may be) metallic particles, such as noble metal particles. The electrically conductive particles may include at least one of: tin, silver and carbon particles. Additionally, optionally or alternatively, the electrically conductive filler material 212 may include a conductive corrosion protective ink 212 and chemically resistant resin 211.

The battery arrangement 210 may include (or may be) a printed battery electrode (active material 102) on a conductive ink (a mixture of carbon particles and resin 205) on a substrate (metal) 104. The amount (or quantity) of conductive particles may be minimised and the chemical resistant resin in the mixture may be maximised so as to maximise corrosion protection of the metal electrode layer 104 against the electrolyte. If the conductive ink were optimised for high conductivity by maximising the carbon particles to resin ratio, the high conductivity facilitated by dense conductive particles bridging between the active material and the metal may be problematic if the electrolyte used is corrosive to the metal current collector. In contrast, the number of conductive particles embedded in the resin may be reduced so that the absorption of the corrosive electrolyte through the mixture 205 is minimised, while maintaining the bridge function in the z- axis between the active material 102 and the metal substrate 104. The ratio of electrically conductive filler material 212 to chemically resistant layer 211 (by volume) may be between 1: 100 and 1:2 (or e.g. between 1:1 and 1: 2). Alternatively or optionally, the electrically conductive filler material 212 may occupy between 1% and 50% (or e.g. 30% and 50%) by volume of the protection layer structure 205.

Fig. 2C shows an illustration of a battery arrangement 220 including a protection structure 205 formed on the metal electrode layer 104. The battery arrangement 220 may include one or more or all of the features already described in connection with Figs. 1A to 2B.

Fig. 2C shows a patterned insulating layer 211 screen printed on a metal current collector 104 to minimise the contact area between the metal 104 and the active material 102 to reduce the risk of corrosion. Reproducibility of the battery arrangement 220 may be improved by using a patterned insulating layer 211 deposited on the metal substrate 104.

The patterned insulating layer 211 may include (or may be) a chemically resistant epoxy layer which may include holes where the metal substrate 104 is exposed. These holes act as the bridge or conductive path between the active material and the metal when a conductive carbon ink is deposited on top and fill the holes all the way through to the metal. The protection structure 205 may include one or more electrically conductive vias 215 extending through a patterned chemically resistant layer 211. The one or more electrically conductive vias 215 may be formed in through-holes patterned (or etched) in the chemically resistant layer 211, and extending between the metal electrode layer 104 and the first anode/cathode 102 (active material). The one or more electrically conductive vias may extend from the metal electrode layer 104 to the first anode/cathode 102 thereby forming one or more electrically conductive paths between the metal electrode layer 104 and the first anode/cathode 102. Optionally, the material of the one or more electrically conductive vias 215 may include (or may be) formed by the same materials as the electrically conductive filler material described in connection with Fig. 2B, such as metal or electrically conductive carbon.

Additionally, or optionally, the protection structure 205 may include an electrically conductive layer 216 formed on the second side 214 of the chemically resistant layer 211. The electrically conductive layer 216 may include (or may be) formed from an electrically conductive and chemically resistant material, which may be corrosion resistant against the electrolyte. Optionally, the electrically conductive layer 216 may be formed from the same (or alternatively, different) material as the one or more electrically conductive vias 215.

Optionally, the electrically conductive vias 215 may occupy between 1% and 50% (or e.g. 30% and 50%) by volume of the protection layer structure 205. Additionally or optionally, each electrically conductive via 215 may occupy between 0.1% and 0.6% of a surface area of a lateral surface of the protection layer structure 205. Additionally or optionally, the ratio of an (average) diameter of the electrically conductive vias may be between 10% and 40% (or e.g. between 10% and 25%) of the (average) distance between neighboring (directly adjacent) electrically conductive vias. For example, for a 6cm² electrode, the average diameter of the (each) electrically conductive vias 215 may be 1 to 2 mm. Additionally or optionally, the average distance between adjacent vias 215 may be between 0.5 cm and 1 cm, for example. Additionally or optionally, a 6 cm² electrode may include between 20 to several hundred vias 215 (e.g. between 20 and 100 vias, or e.g. between 20 and 50 vias).

By implementing the patterned insulating layer 211 printed on a metal current collector 104 to minimise the contact area between the metal and the active material to reduce the risk of corrosion, the number of and dimensions of electrically conductive vias may be well controlled. This may improve the control over the arrangement of conductive particles hence reducing sample-to -sample variation which may adversely affect the total resistance of the battery and the corrosion protection properties.

The examples shown in Figs. 2A to 2C therefore show different implementations of a protection structure 205 which may include (or may be) a corrosion protection structure for protecting the metal electrode layer 104 against chemical corrosion by the electrolyte from the electrolytic region 106. The protection structure 205 may in some examples include at least two different corrosion protection materials (e.g. 208, 209, or e.g. 211, 212, or e.g. 211, 215, 216), which are more chemically resistant towards the electrolyte than the metal electrode layer 104. In addition, at least one of the two corrosion protection materials may be electrically conductive, and may also function as the current collector (e.g. 208, 209, or e.g. 212, or e.g. 215, 216). In some examples, one of the two corrosion protection materials (e.g. 211) may be electrically insulating.

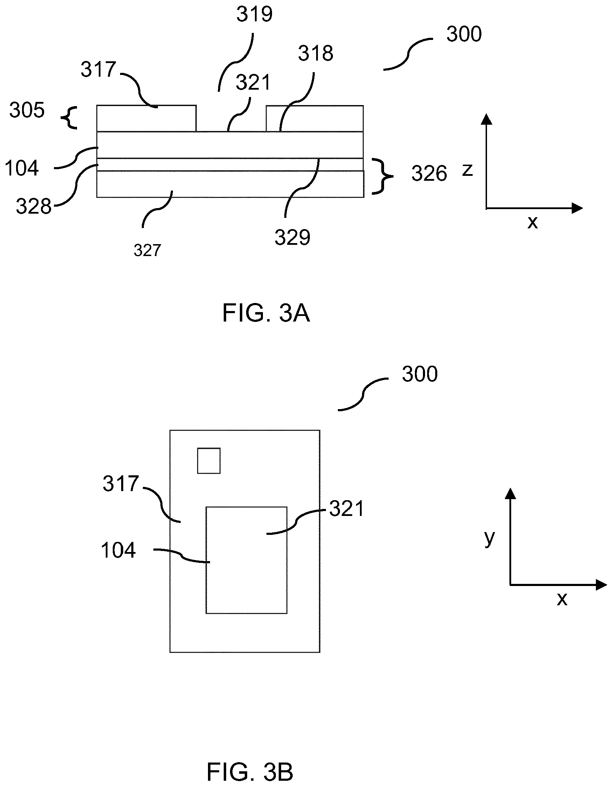

Figs. 3A and 3B show a cross-sectional view and top view of a battery arrangement 300. Figs. 3A and 3B show examples of how a battery arrangement 300 may include a protection structure 305. The battery arrangement 300 may include one or more or all of the features already described in connection with Figs. 1A to 2C.

As shown in the cross-sectional illustrations of Figs. 3A the metal electrode layer 104 may be formed on a first packaging structure 326. The first packaging structure 326 may include a plastic layer 327 such as a plastic sheet, film or substrate (e.g. a plastic laminate layer). The metal electrode layer 104 may be laminated (or e.g. adhered, or e.g. fixed) to the plastic layer 327, such as via an adhesive layer 328. For example, a lateral surface of the metal electrode layer 104 may be adhered to a lateral surface of the plastic layer 327.

A protection structure 305 may be implemented on the metal electrode layer 104. The protection structure 305 may include an electrically insulating portion 317 formed on a first surface 318 of the metal electrode layer 104. The protection structure 305 may further include a corrosion protection portion (not shown) which may include one or more or all of the features of the corrosion protection structure 105, 205 already described in connection with Figs. 1 to 2C. Optionally, the electrically insulating portion 317 of the protection structure 305 may also be or include a chemically resistant layer. Optionally, the electrically insulating portion 317 may include (or may be) a polymer, a resin, a plastic and/or an epoxy. Optionally, the electrically insulating portion 317 may include (or may be) a polymer, such as PET (polyethylene terephthalate), PA (polyamide), and/or PP (polypropylene).

The protection structure 305 (for example, the electrically insulating portion 317 of the protection structure 305) may further include a cavity 319 arranged in the electrically insulating portion 317 and extending through the electrically insulating portion 317. The cavity 319 may be formed in a battery cell region of the battery arrangement 300 which is where electrochemically activity of the battery arrangement 300 takes place. The cavity 319 may expose at least a portion 321 of the metal electrode layer 104 arranged in the battery cell region of the battery arrangement 300. Optionally, the corrosion protection portion 105, 205 (not shown, but described in connection with Figs. 1A to 2C) may be arranged on (e.g. directly on) the exposed portion 321 of the metal electrode layer 104. Optionally, the corrosion protection portion 105, 205 of the protection structure 305 may be formed after the electrically insulating portion 317, thereby covering the portion 321 of the metal electrode layer 104 arranged in the battery cell region and at least part of the electrically insulating portion 317. Alternatively, the corrosion protection portion 105, 205 may be deposited directly on the metal electrode layer 104 before forming the electrically insulating portion 317, and the electrically insulating portion 317 with an opening may be formed on the corrosion protection portion 105, 205. The opening in the electrically insulating portion 317 may form the cavity 319 of the electrically insulating portion 317, which may expose at least the portion of the corrosion protection portion 105, 205 formed on the exposed portion 321 in the battery cell region.

The electrochemically active portion 103 (not shown) of the battery arrangement 300 may be formed in the battery cell region on a portion of corrosion protection portion 105, 205 located within the cavity 319 (or exposed by the cavity 319). Optionally, both the corrosion protection portion 105, 205 and the first anode/cathode 102 may be formed, following which, the electrically insulating portion 317 may be formed on the first anode/cathode 102, wherein the cavity 319 defines the battery cell region. The electrolytic portion 106 may be formed in the cavity 319 after forming the electrically insulating portion 317.

In various examples, it will be shown that the metal electrode layer 104 may include, (or may be) a layer of metal foil, a layer of plated metal, or a printed metal layer printed from metal ink. In other words, the metal electrode layer 104 may be at least one of printed, plated and laminated onto the first packaging structure. As will be described in various examples, alternatively, instead of lamination, the metal electrode layer 104 may be printed (e.g. ink-jet printed using metal ink, such as copper ink) or plated (by e.g. electroplating, or e.g. electroless plating) followed by etching on at least part of the plastic layer 327.

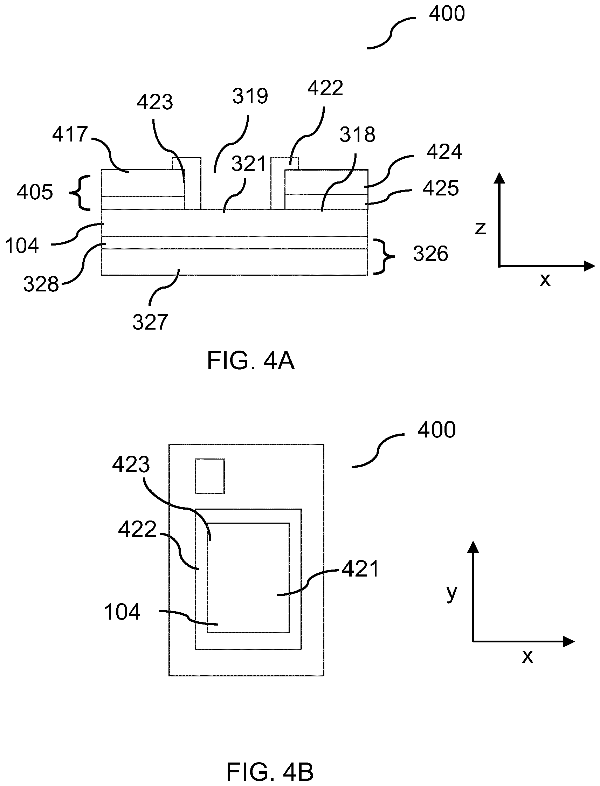

Figs. 4A and 4B show a cross-sectional view and top view of a battery arrangement 400. including a protection structure 405 formed on the metal electrode layer 104. The battery arrangement 400 may include one or more or all of the features already described in connection with Figs. 1A to 3B.

The protection structure 405 may be similar to the protection structure 305 described in connection with Figs. 3A to 3B. For example, the protection structure 405 may include an electrically insulating portion 417 formed on a first surface 318 of the metal electrode layer 104. The electrically insulating portion 417 of the protection structure 405 may optionally include (or may be) a chemically resistant layer. Additionally or optionally, the metal electrode layer 104 may be formed on a first packaging structure 326. The first packaging structure 326 may include a plastic layer 327 such as a plastic sheet, film or substrate (e.g. a plastic laminate layer). The metal electrode layer 104 may be laminated (or e.g. adhered, or e.g. fixed) to the plastic layer 327, such as via an adhesive layer 328.

In contrast to electrically insulating portion 317, the electrically insulating portion 417 shown in Figs. 4A and 4B includes a plastic layer 424 and an adhesive layer 425. The plastic layer 424 may be adhered, fixed and/or laminated to the metal electrode layer 104 via the adhesive layer 425. Optionally, the plastic layer 424 may include (or may be) PET (polyethylene terephthalate), PA (polyamide) and/or PP (polypropylene).

The protection structure 405 may further include a (or at least one) sidewall protection structure 422 formed on sidewalls 423 of the cavity 319. Optionally, the sidewall protection structure 422 may form a circumference or perimeter around the exposed portion 321 of the metal electrode layer 104. If the first anode/cathode 102 is already formed, the sidewall protection structure 422 may form a circumference or perimeter around the exposed portion of the first anode/cathode 102 in the cavity 319. The sidewall protection structure 422 may be formed directly on and may cover the adhesive layer 425 and the plastic layer 424, such as the regions of the adhesive layer 425 and the plastic layer 424 forming the sidewalls 423 of the cavity 319 or exposed at the sidewalls 423 of the cavity 319. The sidewall protection structure 422 may therefore protect the adhesive layer 425 from corrosion by the electrolyte from the electrolytic portion 106.

Additionally, optionally, or alternatively, the protection structure 405 may include the corrosion protection portion 105, 205 described in connection with Figs. 1A to 3B. For example, the corrosion protection portion 105, 205 (not shown) may be formed on a surface of the metal electrode layer 104 between the metal electrode 104 layer and the first anode/cathode 102 (not shown). Optionally, both the corrosion protection portion 105, 205 and the first anode/cathode 102 may be formed before forming the electrically insulating portion 417 and the sidewall protection structure 422. In which case, the electrically insulating portion 417 having the cavity 319 may expose the first anode/cathode 102 in the battery cell region of the battery arrangement 300, and the electrolytic portion 106 may be formed on the first anode/cathode 102 within the cavity 319 in the battery cell region.

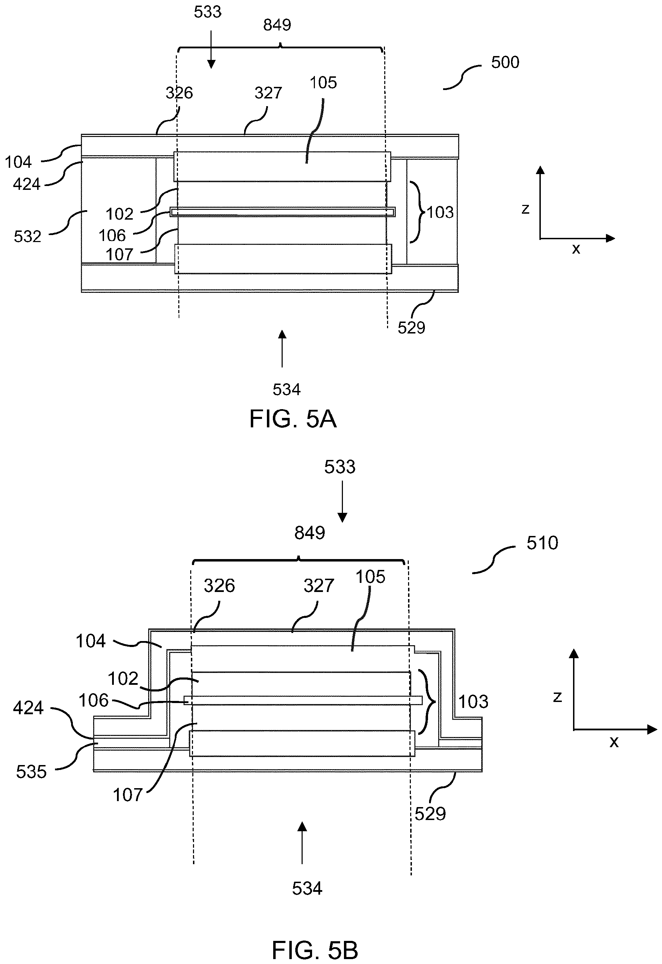

Fig. 5A shows a cross-sectional illustration of a battery arrangement 500. The battery arrangement 500 may include one or more or all of the features already described in connection with Figs. 1 to 4B.

As shown in Fig. 5A the battery arrangement 500 may include a battery package. The battery package may include the first packaging structure 326 which may be arranged at a first side 533 of the battery arrangement 500 and the second packaging structure 529 which may be arranged at a second side 534 (opposite to the first side 533) of the battery arrangement 500. The first layer arrangement may be arranged between the first packaging structure 326 and the electrochemically active portion 103. The electrochemically active portion 103 may be arranged between the first layer arrangement and a second layer arrangement. The second layer arrangement may be arranged between the electrochemically active portion 103 and the second packaging structure 529.

The battery arrangement 500 may further include an adhesion portion 532 located circumferentially (e.g. concentrically) around an inner region (battery cell region 849) of the battery arrangement 500. The battery cell region 849 of the battery arrangement 500 may include a sandwich (or stack) of planar layers, which may include the electrochemically active portion 103 (including the first anode/cathode 102, the electrolytic portion 106, and the second anode/cathode 107). Additionally, the battery cell region 849 of the battery arrangement 500 may include the first layer arrangement 101 (current collector) connected to the first anode/cathode 102 and optionally the second layer arrangement (current collector) connected to the second anode/cathode.

The adhesion portion 532 may include (or may be) an adhesive which joins the first packaging structure 326 to the second packaging structure 529. The first packaging structure 326 and the second packaging structure 529 may be joined to each other around the electrochemically active portion 103, such as around a circumference or perimeter around the electrochemically active portion 103 (e.g. around the battery cell region 849). For example, the electrochemically active portion 103, the first layer arrangement 101 (current collector) and/or the second layer arrangement may be sandwiched between the first packaging structure 326 and the second packaging structure 529. The adhesion portion 532 may include (or may be) a robust insulating layer, which may be secured or fixed on a printed adhesive. The layer acts as a physical barrier and prevents contact between the two sides during punching (pressing) to prevent them from shorting.

Optionally, the adhesive portion 532 may be as thick as the total thickness of the sandwich in the cell, (e.g. equal to or larger than the thickness of the layers in the battery cell region 849, excluding the packaging structure). Optionally, the thickness of the adhesion portion 532 may be between 80 % and 120 % (e.g. between 80% and 110%, or e.g. between 80% and 100%), of the layers in the battery cell region 849, excluding the packaging structure. This thickness may be around 250 µm (or e.g. between 200 µm and 500 µm), for example. Additionally or optionally, the thickness of the adhesion portion 532 may be greater than 50 % of a total (maximal or largest) thickness of the battery arrangement. Optionally, the thickness of the adhesion portion 532 may be between 50 % and 120 % (e.g. between 50% and 100%, or e.g. between 80% and 100%), or substantially equal to the total thickness of the battery arrangement 100.

The total thickness of the battery arrangement 100 may range from between 300 µm and 2mm, (or e.g. between 450 µm and 1 mm, or e.g. between 450 µm and 750 µm). The electrically active portion 103 (e.g. active material) may have a thickness of between 100 µm and 300 µm (or e.g. between 100 µm and 250 µm, or e.g. between 100 µm and 200 µm). A packaging structure (may have a thickness of between 50 µm and 200 µm (or e.g. between 50 µm and 150 µm, or e.g. between 50 µm and 100 µm).

In some examples, the metal electrode layer 104 may be embedded in the first packaging structure 326, such as if the first packaging structure 326 is a triple layer laminate (e.g. plastic-metal-plastic packaging) or a double layer laminate (e.g. plastic-metal packaging). Fig. 5A shows, for example, a triple-layer laminate on both sides 533, 534 of the battery arrangement. For example, plastic layer 327, metal layer 104 and plastic layer 424 forms a triple-layer laminated arrangement. The intermediate metal layer may act as a structural part of the packaging which provides good barrier properties and as a current collector to lower total resistance. The adhesion portion 532 may prevent electrical shorting between electrically conductive layers embedded in the first packaging structure 326 and electrically conductive layers embedded in the second packaging structure 529.

The adhesion portion 532 for joining the first packaging structure 326 to the second packaging structure 529 may be formed on the portions of the packaging structure 326 outside the battery cell region 849. For example, the adhesion 532 may be formed on the plastic layer 424. The plastic layer 424 may be equivalent or the same as the electrically insulating portion 417 described in connection with Figs. 4A to 4B.

Fig. 5B shows a cross-sectional illustration of a battery arrangement 510. The battery arrangement 510 may include one or more or all of the features already described in connection with Figs. 1 to 5A. In contrast to the battery arrangement 500 shown in Fig. 5A, the battery arrangement 510 comprises an adhesion portion 535 which is thinner than the electrochemically active portion 103. The adhesion portion 535 may have a thickness of between 10 µm and 50 µm, for example. This thickness may be between 5% and 10% of a total (maximal or largest) thickness of the battery arrangement 510. It is possible that electrical shorting may occur between the metal 104 of the first multi-laminate packaging structure and the metal of the second multi-laminate packaging structure if the adhesion portion 535 is not sufficiently thick.

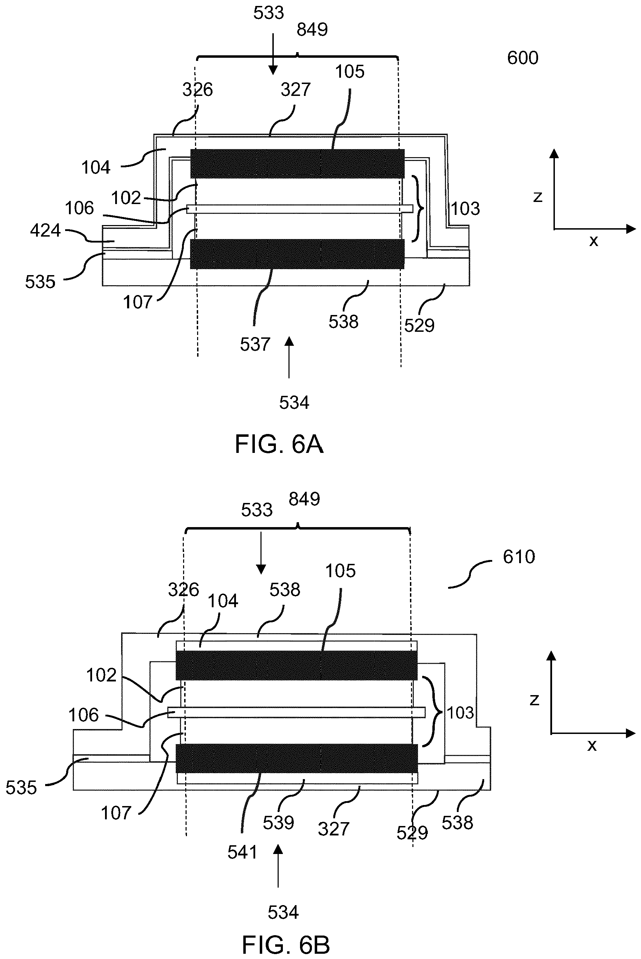

Figs. 6A to 6B related to design consideration to avoid shorting during die cutting a full battery into final shape.

Fig. 6A shows a cross-sectional illustration of a battery arrangement 600. The battery arrangement 600 may include one or more or all of the features already described in connection with Figs. 1 to 5B. Fig. 6A shows a combined design of plastic/metal/plastic packaging with printed carbon collector on the other side to avoid shorting.

In the battery arrangement 600 shown in Fig. 6A, one of the first packaging structure 326 and the second packaging structure 529 may be single-layer plastic. For example, the first packaging structure 326 may include a multi-layer packaging laminate (e.g. a triple layer packaging laminate), however the second packaging structure 529 may include (or may be) a single plastic layer 538. Optionally, a second electrode layer 537 (e.g. a second current collector) may be at least one of printed, plated and deposited onto the plastic layer 538. The second electrode layer 537 may optionally include (or may be) a metal electrode layer which is formed from an identical (same) material as the first metal electrode layer 104. Alternatively, the second electrode layer 537 may include or be formed by a different material as the first metal electrode layer 104. For example, the second electrode layer 537 may include (or may be) a carbon-based electrode layer (e.g. a layer include carbon, such as graphene or graphite). Using a multi-layer packaging structure in combination with a single-layer packaging structure, (e.g. by using the metal foil current collector only for one of the electrodes and printing the other electrode on a carbon current collector on a plastic substrate) may reduce electrical shorting. By doing this, the metal of the multi-laminate packaging structure comes into contact with the top plastic layer 538 of the other electrode single-plastic packaging, and thus avoids the formation of a conductive path.

Fig. 6B shows a cross-sectional illustration of a battery arrangement 610. The battery arrangement 610 may include one or more or all of the features already described in connection with Figs. 1 to 6A.

Fig. 6B shows another approach to forming a battery arrangement 610 which includes printing, etching, or plating the metal current collector on plastic substrates in desired patterns instead of using a plastic/metal/plastic multi-laminate packaging. Fig. 6B shows the use of patterned metal packaging. This has the extra benefit of avoiding issues with short-circuiting which can occur during the final die-cutting and sealing steps, improving the overall reliability of the produced devices.

In the battery arrangement 610, both the first packaging structure 326 and the second packaging structure 529 may be single-layer plastic. For example, the first packaging structure 326 may include a single plastic layer 327 and the second packaging structure 529 may include a single plastic layer 538. The first metal electrode layer 104 may be at least one of printed, plated and deposited onto the plastic 327. Printing, plating and/or etching the metal current collectors onto the plastic substrates in desired patterns instead of using a plastic/metal/plastic laminate may help in reducing material waste and cost. Additionally the protection structure 105, 205 (e.g. a carbon-based layer and/or a tin layer) may be formed on the metal electrode layer 104 on (or of) the first packaging structure 326.

Additionally or optionally, the same process may be repeated for the second packaging structure 529. For example, the battery 610 may include a second layer arrangement which includes a second metal electrode layer 539 and a second protection structure 541 arranged between the second metal electrode layer 539 and the second anode/cathode 107. The second (metal) electrode layer 539 may be at least one of printed, plated and deposited onto the plastic layer 538, following which the second protection structure 537 (e.g. a carbon-based layer and/or a tin layer) may be formed on the second metal electrode layer 539. The first metal electrode layer 104 and the second metal electrode layer 539 may optionally include metal ink printed onto at least part of the plastic substrate, or alternatively, metal plated onto at least part of (e.g. desired patterns) the plastic substrate.

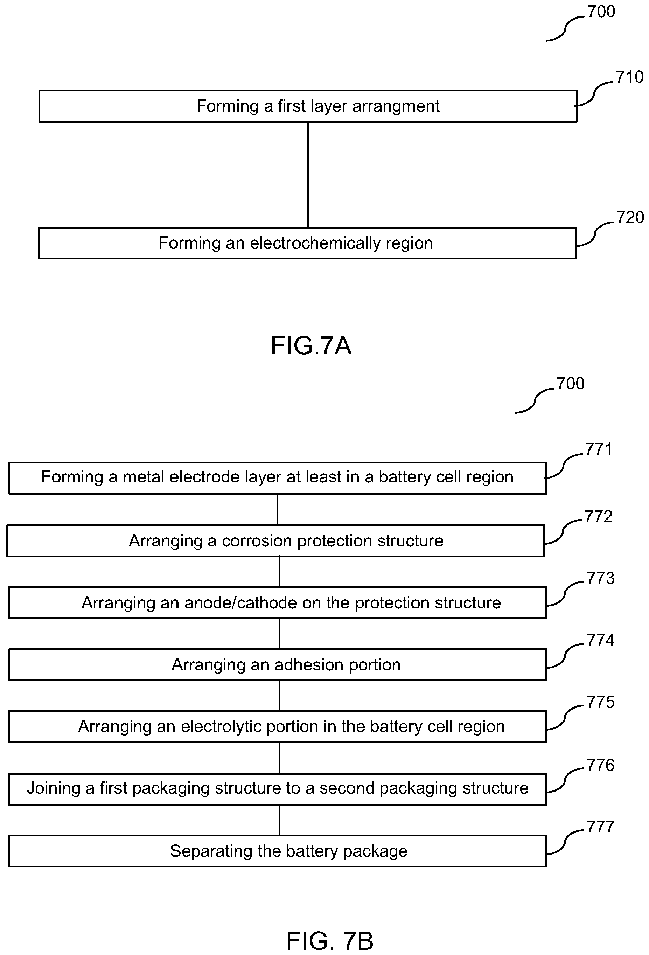

Fig. 7A shows a flow diagram of a method 700 for forming a battery arrangement. The method 700 includes forming 710 a first layer arrangement of a battery arrangement. Forming the first layer arrangement includes forming a protection structure on a metal electrode layer of the first layer arrangement. The method 700 further includes forming 720 an electrochemically active portion of the battery arrangement on the protection structure. The electrochemically active portion includes a first anode/cathode, a second anode/cathode, and an electrolytic portion between the first anode/cathode and the second anode/cathode.

Optionally, the method 700 may further include forming a second protection structure on the second anode/cathode. The method 700 may further include forming a second metal electrode layer on a second packaging structure. The method 700 may further include joining the first packaging structure to the second packaging structure using an adhesion portion formed around the edge region of the battery package. A thickness of the adhesion portion may be greater than 50% of a thickness of the battery arrangement.

The method 700 for forming the battery arrangement may include base material preparation 771, such as forming a metal electrode layer at least in a battery cell region. The method 700 includes various different approaches for forming base material preparation. Such approaches or processes may include a) the use of copper foil in lamination processes, b) screen printing copper ink, and c) plating (bottom up) and/or etching (top down) of copper. Preparing the packaging material may include forming the metal electrode on the packaging structure to form a metal-based packing. Preparing the packaging material may serve at least two main functions: encapsulating the internal components and current collection. Printing and etching may allow the circuit to be a pattern on the same layer thus improving integration and reducing production steps. Thus, a durable and high power acidic or alkaline based thin and printed battery with metal current collect (or may be) manufactured.

The method 700 may further include arranging 772 a corrosion protection structure on the metal electrode layer. Arranging the corrosion protection structure may include corrosion protective metal deposition and/or corrosion protective carbon layer deposition.

The method 700 may further include electrode formation, such as arranging 773 an anode/cathode on the protection structure. The method may further include arranging an adhesive portion 774 on the protection structure. This may include forming the adhesive by adhesive printing. The method 700 may further include arranging 775 an electrolytic portion in the battery cell region, which may include separator placement and electrolyte deposition. The method 700 may further include joining 776 (or sealing) a first packaging structure to a second packaging structure and separating 777 the battery packaging into the final shape by die cutting (or dicing).

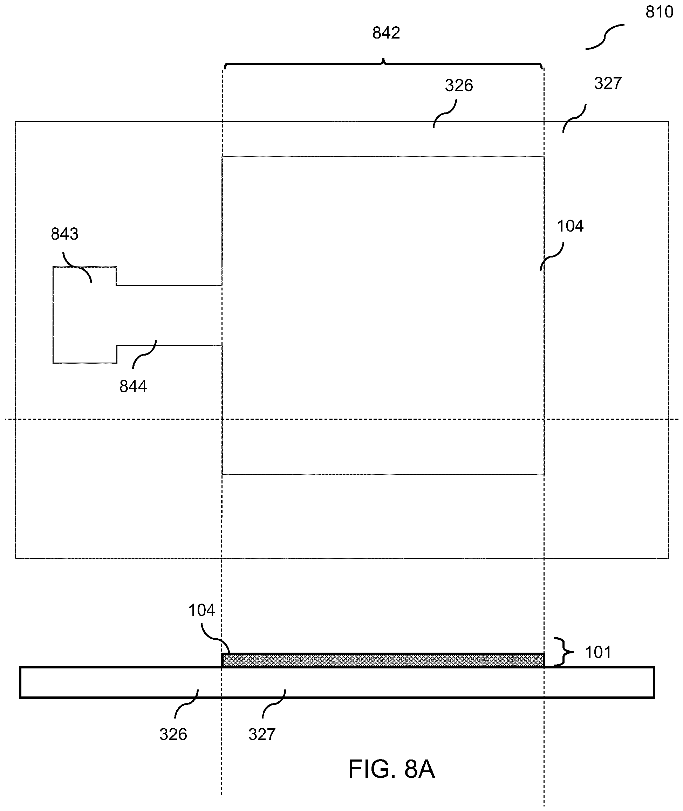

Figs. 8A to 8G show illustrations of the method 700 for forming a battery arrangement. The battery arrangement may optionally be but is not limited to being a flexible zinc-manganese dioxide batteries with copper current collectors. Each figure shows a top view and a cross-sectional illustration of a battery arrangement in various stages of the battery arrangement formation process. Figs. 8A to 8G show a process which includes printing the electrodes (or optionally forming the electrodes by plating) and wherein an adhesion portion 532 (or adhesive) may be printed, or die cut and placed.

As shown in Fig. 8A, forming 710 the first layer arrangement 101 of the battery arrangement may include forming the metal electrode layer 104 on a first packaging structure 326. Forming the metal electrode layer 104 on the first packaging structure 326 may be done in several ways. In one example, the first packaging structure 326 may include (or may be) plastic layer 327 (e.g. a planar plastic sheet or foil or packaging). The base metal electrode layer 104 may be deposited onto the plastic layer 327 by printing (e.g. inkjet printing). The metal ink (e.g. copper ink) may be deposited (e.g. dispensed) onto selected areas on the plastic layer 326, 327. The metal electrode layer 104 may include a main electrode region 842 and an external contact region 843 (for providing an external electrically contact to the main electrode region). The main electrode region 842 may be connected to the external contact region 843 via a connection region 844 of the metal electrode layer 104. The metal electrode layer 104 may include (or may be or may function as) a current collector layer for the battery arrangement.

A battery cell region of the battery arrangement may be formed on the main electrode region 842 of the metal electrode.

If printing copper metal-based ink on the plastic substrate, the ingredients of the ink including binder and stabilizers may have to be compatible with the battery chemistry to eliminate the risk of side reactions. Screen printable silver ink may minimise the cost. To be able to maintain the cost low and print block of ink, a copper ink, may be used. An additional sintering process may be carried out after printing and drying to fuse the copper particles to stop copper particles from oxidising. It may then be possible to electroless or electrolytically plate other metals (e.g. corrosion protection materials) on the copper based on available chemistries. It may lead to improved electrical conductivity, reducing the probability of oxidation, and stabilises the conductivity variations resulting from printing defects.

As an alternative to forming the metal electrode layer 104 by printing, the metal electrode layer 104 may be formed either by etching metal off plastic substrates (using a top down process) or electroless plating metal on plastic substrates (using a bottom up process). The method may include masking parts of the metal substrate with an acid or base resistant film to ensure protection against the etching solution. This would be the pattern remaining once the process is complete as the exposed area would be attacked by the solution and removed. Both etching and electroless plating used electrochemical methods but the process is different as etching is used to remove material from the surface while electroless or electrolytic plating is used for coating a base layer.

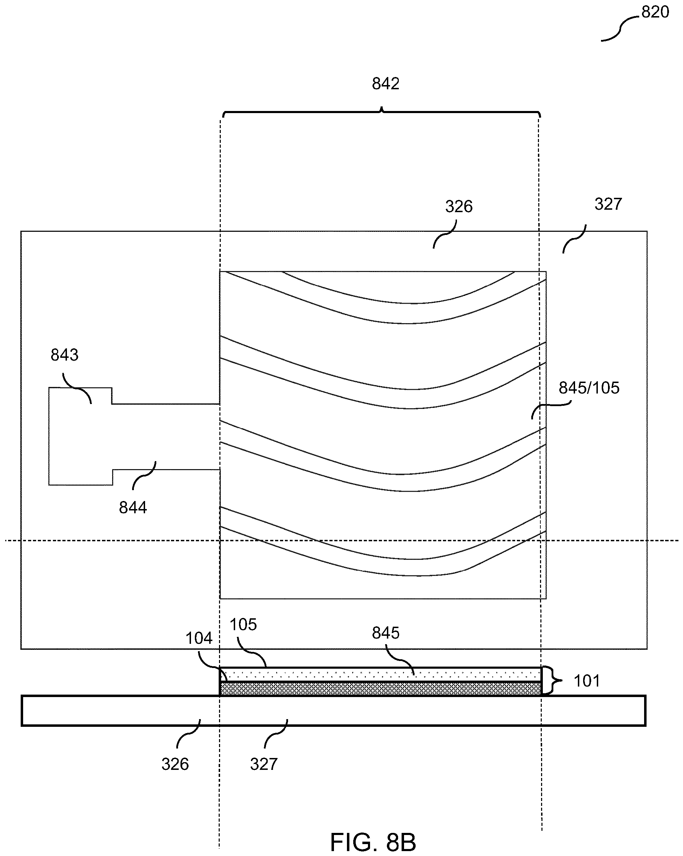

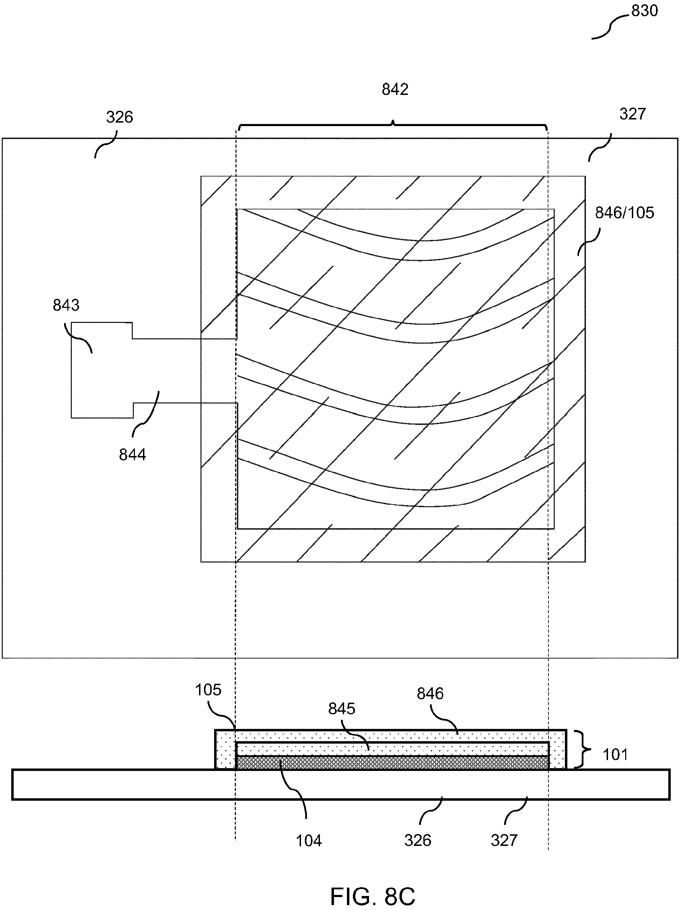

As shown in Figs. 8B and 8C, after forming the metal electrode layer 104, the protection structure 105 may be formed at least on the main electrode region 842 of the metal electrode layer 104. Forming the protection structure 105 may include forming at least one layer 845 on the metal electrode layer. The at least one layer 845 may include (or may be) a noble metal layer (e.g. a tin layer) and/or a carbon layer on the metal electrode layer.

As shown in Figs. 8B and 8C, the protection structure 105 may include at least one first corrosion protection layer 845 (e.g. a metal layer, such as tin layer) which may be deposited by plating. It may be possible for more than one metal corrosion protection layer 845 that are electrochemically stable in the provided electrolytes to be deposited by plating. For example, a thin layer of corrosion protective metal 845 may be deposited via immersion plating. Tin may provide corrosion resistance, solderability, and a superior contact surface than bare copper metals. Tin or tin alloys plated surface lowers gassing in batteries as it is a high hydrogen overpotential metal.

The protection structure 105 may further include and a second corrosion protection layer 846 (e.g. a carbon-based layer, e.g. a carbon layer, a graphene layer, and/or graphite layer) that may provide both protection and low metal contact resistance. The carbon- based layer may be highly resistant to the electrolyte on metal current collectors, and may be deposited either directly on the base metal (copper) or on the thin corrosion protective layer (tin) depending on the chemistry and device structure. Optionally, the second corrosion protection layer 846 may be deposited by printing, using carbon or graphene-based inks, or via spray-coating, dip-coating, bar-coating or screen printing or any other form of coating depending on the formulation and viscosity of the ink followed by flash, UV or oven curing. The carbon-based layer may also serve as an interlayer between the metal electrode layer 104 and the active material (e.g. the first anode/cathode) to reduce the contact resistance while blocking the migration of the ions in the electrolyte.

The layers 845, 846 of the protection structure 105 may be planar layers which may be formed on top of each other in various combinations (e.g. tin on carbon, or e.g. carbon on tin). In some examples, the protection structure 105 may be formed at least on and covering the main electrode region 842 of the metal electrode layer 104. Optionally, one or more layers of the protection structure 105 may cover the main electrode region 842 and also at least part of the plastic layer 327. For example, as shown in Fig. 8C, the second protection layer 846, which may be a corrosion protective carbon, may cover the main electrode region 842 and also part of the plastic layer 327 located circumferentially (concentrically) around the main electrode region 842.

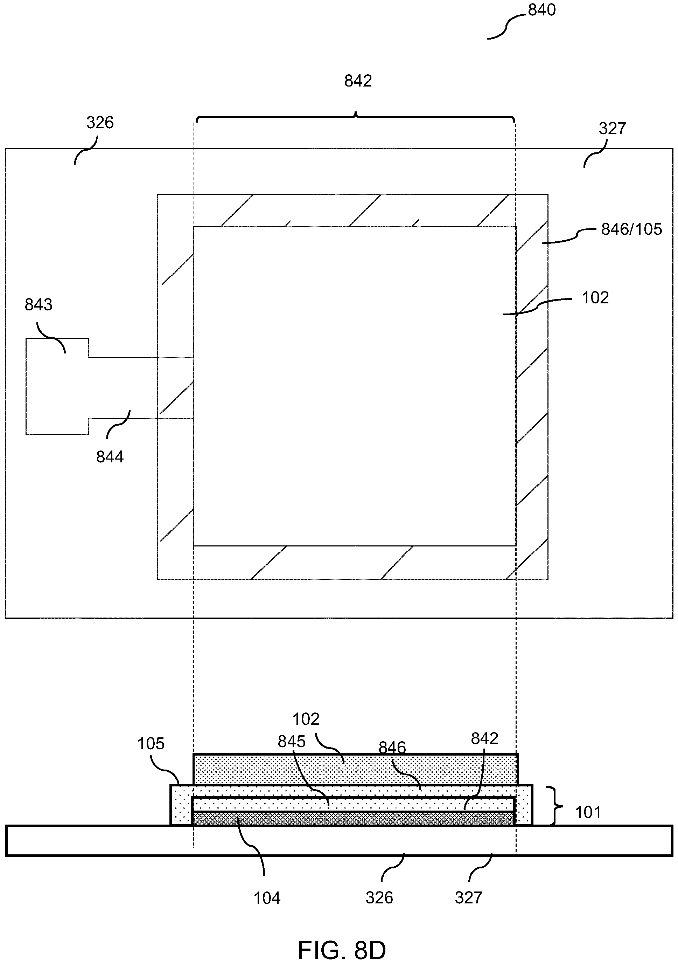

As shown in Fig. 8D, after forming the protection structure 105, the method may include forming a first anode/cathode 102 on the protection structure 105. The first anode/cathode 102 may be formed in the battery cell region. For example, the first anode/cathode 102 may be formed at least on and covering the portion of the protection structure 105 on the main electrode region 842 of the metal electrode layer 104. As can be seen from Fig. 8D, the protection structure 105 may extend beyond the external boundaries of the first anode/cathode 102, wherein circumferential edge regions of the protection structure 105 are exposed (e.g. not covered by the first anode/cathode 102).

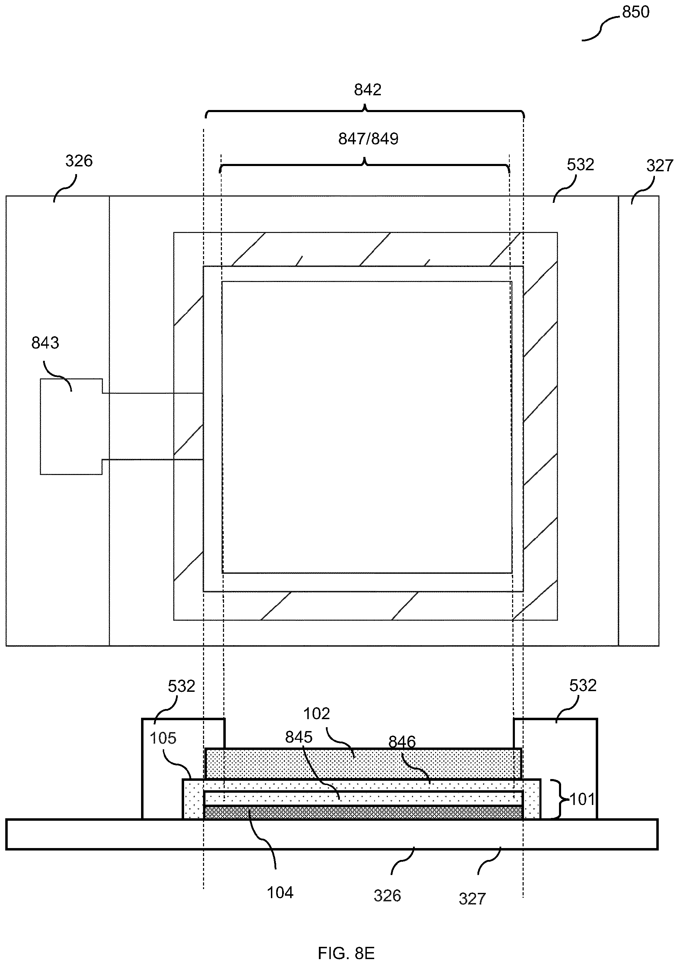

As shown in Fig. 8E, the method 700 may further include depositing an adhesion portion 532 on the first packaging structure 326 and on at least part of the first anode/cathode 102 after forming the first anode/cathode 102. The adhesion portion 532 may be formed around the battery cell region 849 of the battery arrangement, exposing a concentric inner region 847 of the first anode/cathode and covering a concentric outer region outside the battery cell region 849. The adhesion portion 532 may be formed by printing or alternatively by cutting and placing the adhesion portion in the desired area.

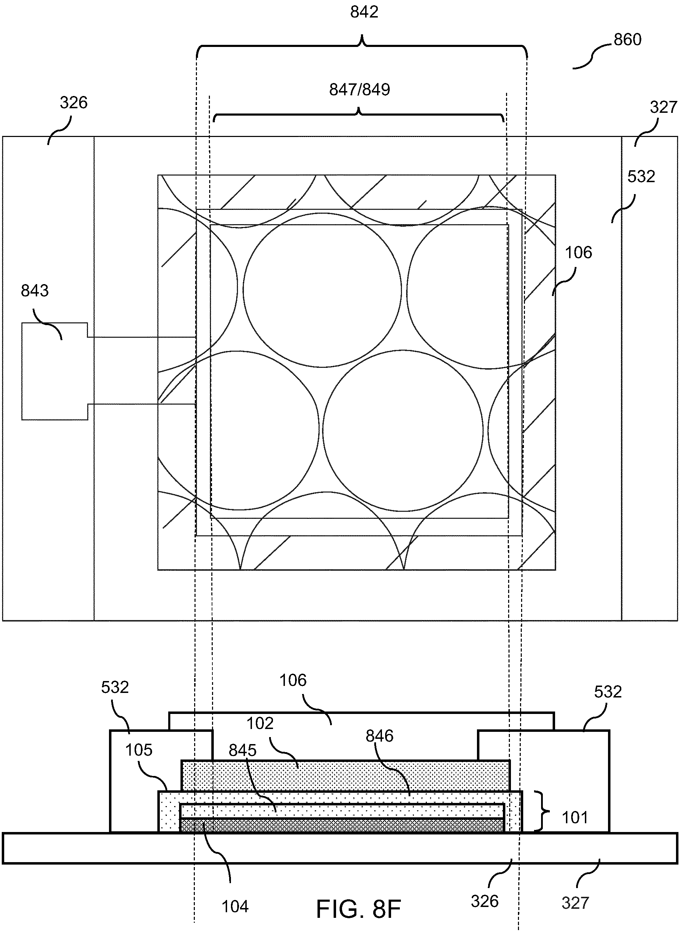

As shown in Fig. 8F, after forming the adhesion portion 532, a separator may then be placed on one of the electrodes with electrolyte and the battery is sealed. For example, the electrolytic portion 106 (e.g. including the electrolyte and optionally a separator) may be formed or deposited at least in the battery cell region 849 of the battery arrangement (e.g. such as on the inner region 847 of the first anode/cathode 102). Additionally, the external contact region 843 of the first metal electrode layer 104 may remain uncovered by the protection structure 105, the first anode/cathode 102 and the adhesion portion 532.

The processes shown in Figs. 8A to 8D may be repeated for the second layer arrangement of the battery arrangement. It may be understood that the processes used to form the second layer arrangement may optionally be identical to those for forming the first layer arrangement, and may optionally use the same materials as those for the first layer arrangement. The processes for forming the first layer arrangement and the second layer arrangement may optionally be carried out simultaneously on the same substrate as will be described in later figures. Alternatively, if different materials are to be used for forming the first layer arrangement and the second layer arrangement, the formation of the second layer arrangement and the first layer arrangement may be carried out in different and/or separate processes as will be described in later figures. Optionally, the process of forming an adhesion portion and/or the electrolytic portion may be repeated for the second layer arrangement if desired. If desired, a second adhesion portion may be deposited on the second packaging structure 529 and at least part of the second anode/cathode. Alternatively, one or more or both of forming the adhesion portion and the electrolytic portion may be omitted.

After forming the electrolytic portion 106 and the adhesion portion 532 on at least one of the first packaging structure 326 and the second packaging structure 529, the method 700 may include joining the first layer arrangement 101 and the second layer arrangement via the adhesion portion 532 so that an electrochemically active portion 103 is sandwiched between the first layer arrangement 101 and the second layer arrangement. Thus, the battery package may be sealed.

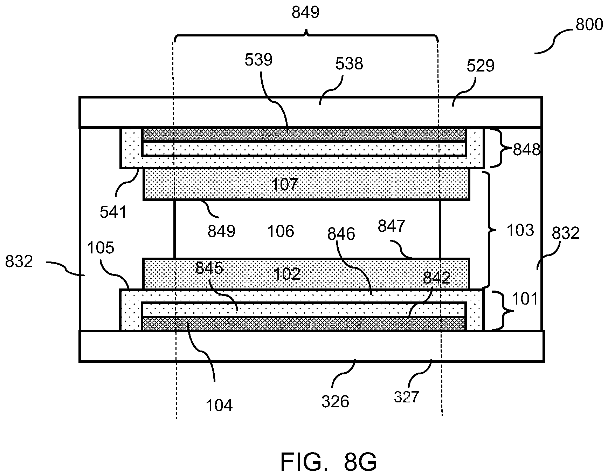

Fig. 8G shows an example of a battery arrangement 800 formed by the method 700. The battery arrangement 800 may include one or more or all of the features already described in connection with Figs. 1 to 8F.

As shown in Fig. 8G, the first packaging structure 326 and the second packaging structure 529 of the battery arrangement 800 may be joined via an adhesion portion 832 (which may include the adhesion portion 532 and/or optionally further adhesion portions) so that the electrochemically active portion 103 is sandwiched between the first packaging structure 326 and the second packaging structure 529. The battery arrangement 800 may thus include the first packaging structure 326, and the first layer arrangement 101 including the first metal electrode layer 104 and the first protection structure 105. Furthermore, the battery arrangement 800 may include the second packaging structure 529, and the second layer arrangement 848 including the second metal electrode layer 539 and the second protection structure 541. The battery arrangement 800 may further include the electrochemically active region 103 arranged between (e.g. sandwiched) the first layer arrangement 101 and the second layer arrangement 848. The electrochemically active region 103 may include the electrolytic portion 106 arranged between (e.g. sandwiched) the first anode/cathode 102 and a second anode/cathode 107 in a battery cell region 849 of the battery arrangement 800. The battery cell region 849 may be formed on an inner portion of the main electrode region 842. The adhesion portion 832 may adhere or fix the first packaging structure 326 to the second packaging structure 529. Additionally or optionally, the adhesion portion 832 may adhere or fix one or more layers formed on the first packaging structure 326 and outside the inner battery cell region 849 to one or more layers formed on the second packaging structure 529 and outside the inner battery cell region 849. The adhesion portion 832 may adhere at least part of the first layer arrangement 101 to at least part of the second layer arrangement 848. For example, portions of the first layer arrangement 101 outside the inner battery cell region 849 of the battery arrangement 800 to portions of the second layer arrangement 848 outside the inner portion 849 of the battery arrangement 800. Additionally or optionally, the adhesion portion 832 may adhere at least part of the first anode/cathode 102 to at least part of the second anode/cathode 107. For example, portions of the first anode/cathode 102 outside the inner battery cell region 849 may be adhered to portions of the second anode/cathode 107 outside the inner battery cell region 849.

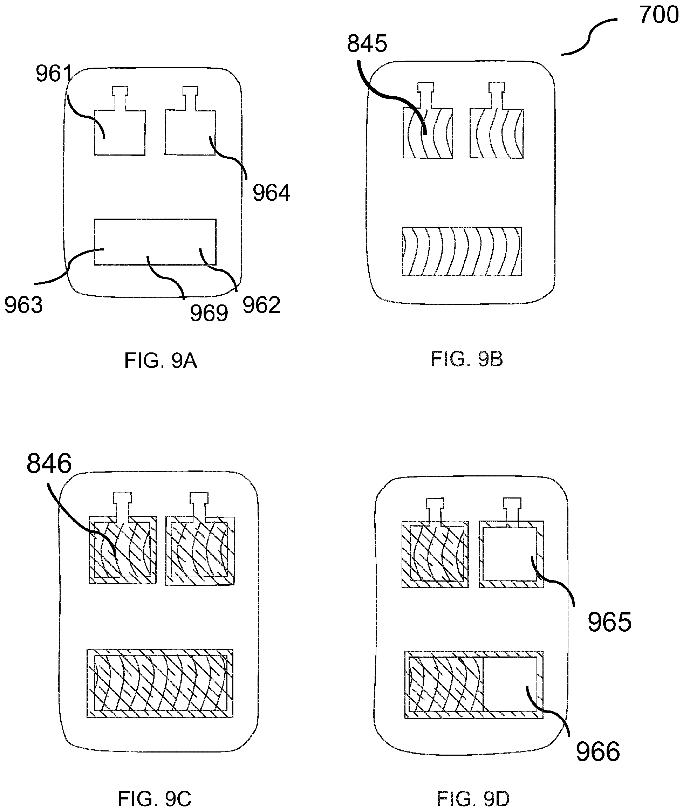

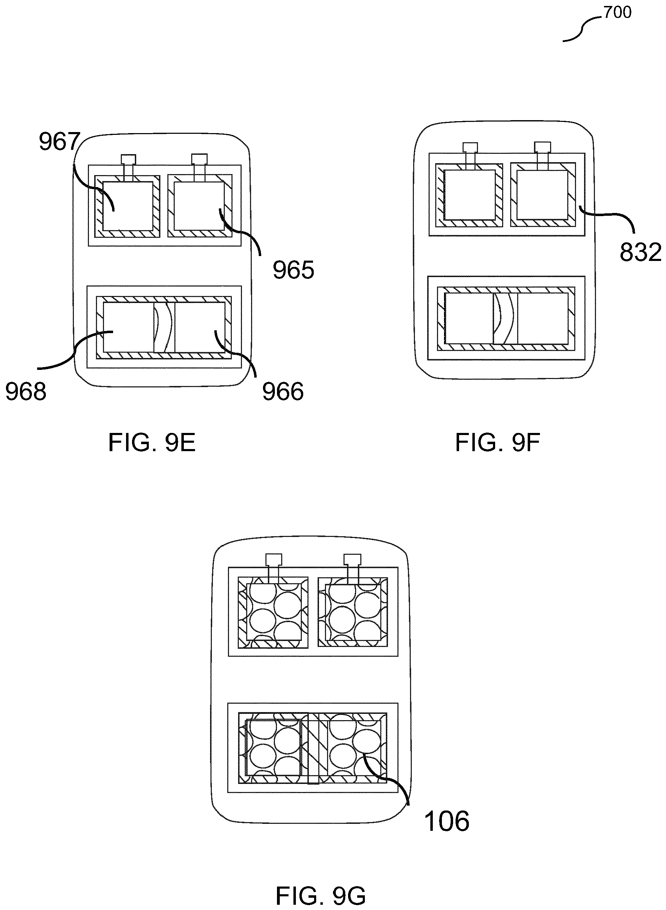

Figs. 9A to 9G shows illustrations of the method 700 for forming a battery arrangement described in connection with Figs. 1A to 8G. The battery arrangement may include 2 (1.5V) battery cells, e.g. a 3V battery. The Figs. 9A to 9G demonstrate how the first layer arrangement and the second layer arrangements may be formed simultaneously before the adhesion process.

As already described with respect to Fig. 8A, forming battery arrangement 900 may include depositing (e.g. printing) a metal layer onto desired regions on a first packaging structure 326 (e.g. a plastic layer). Forming the metal layer may include forming a metal electrode layer portion 961, a metal electrode layer portion 962, a metal electrode layer portion 963, and a metal electrode layer portion 964. A metallic connection portion 969 may join the metal electrode layer 962 to the metal electrode layer 963.

As shown in Figs. 9B to 9C, similarly to Figs. 8B to 8C, after forming the metal, separate protection structures may be deposited on each of the metal regions 961, 962, 963, 964. As shown in Fig. 9D, after forming the protection structures, the method may include forming a first anode/cathode 965 of a first battery cell on the metal electrode layer 964 and a first anode/cathode 966 of a second battery cell on the metal electrode 962. Subsequently, as shown in Fig. 9E, the method may include forming a second anode/cathode 967 of the second battery cell on the metal electrode layer 961 and a second anode/cathode 968 of a second battery cell on the metal electrode layer 963.

As shown in Fig. 9F, the method may further include depositing adhesive 832 over the first anodes/cathodes and second anodes/cathodes of the first battery cell and the second battery cell. After depositing the adhesive 832, an electrolytic layer 106 may be formed or deposited at least on the exposed inner regions of the first anodes/cathodes and second anodes/cathodes of the first battery cell and the second battery cell.

The method may further include cutting the packaging substrate, and joining the cut portions so that a first electrolytic portion may be sandwiched between the first anode/cathode 965 of the first battery cell and a second anode/cathode 968 of the first battery cell. In addition, a second electrolytic portion may be sandwiched between the first anode/cathode 966 of the second battery cell and a second anode/cathode 967 of the second battery cell. The second anode/cathode 968 of the first battery cell may be connected to the first anode/cathode 966 of the second battery cell in series via the metallic connection portion 969 joining the metal electrode layer 962 to the metal electrode layer 963.

It may be understood that different processes or ways for forming the metal electrode layer may each be applied in various combinations to forming the first packaging structure at the first side of the battery arrangement, and the second packaging structure at the second side of the battery arrangement. In some examples, a metal electrode layer may be formed at each side (e.g. both sides) of the battery arrangement. For example, a first metal electrode layer may be formed at the first side of the battery arrangement and a second metal electrode layer may be formed at the second side of the battery arrangement. In some examples, both the first packaging structure and the second packaging structure may be formed using the same method (optionally, simultaneously) and therefore have the same (identical) elements and layers (As shown in Fig. 8G, 9A to 9G).

Alternatively, or optionally, in some examples, the first packaging structure and the second packaging structure may be formed using different processes. For example, forming the metal electrode layer on the plastic layer of the first packaging structure (and optionally or additionally forming the metal electrode layer on the second packaging structure) may including forming (e.g. by printing) a seed layer metal on the desired regions on the plastic layer. For example, the seed layer may be printed to form a main electrode region connected to an external contact region by a connection region. Forming the metal electrode layer may subsequently comprise depositing a metal layer (e.g. a copper layer) by electroplating or electroless plating.

In some examples, the first packaging structure and the second packaging structure may have the different elements and layers. For example, in some examples, a metal electrode layer may be formed at only one side (e.g. the first side) of the battery arrangement but not at the second side of the battery arrangement. For example, the metal electrode layer may be formed using any of the methods described. At the second side of the battery arrangement, the metal electrode layer may be omitted. Instead, an alternative material may be used as an electrically conductive electrode layer, such as a carbon electrode layer (As shown in Fig. 6A).

In some examples, lamination processes using metal foils may be used as an alternative to forming the metal electrode layers by printing and plating. Forming the metal electrode layer on the packaging structure may include laminating a copper foil to a plastic layer (e.g. to a PET laminate layer). This may form a multi-layer packaging structure (e.g. a double-layer packaging structure) and removing (e.g. etching) portions of the copper foil, so that copper foil remaining on desired patterned regions on the plastic layer forms the metal electrode layer. For example, the remaining copper foil may include a main electrode region connected to the external contact region via a connection region of the metal electrode layer.

In some examples, forming the metal electrode layer on the packaging structure may include laminating a copper foil to a plastic layer (e.g. to a PET laminate layer). This may form a multi-layer packaging structure (e.g. a double-layer packaging structure) and removing (e.g. etching) portions of the copper foil, so that copper foil remaining on desired patterned regions on the plastic layer forms the metal electrode layer. For example, the remaining copper foil may include a main electrode region connected to the external contact region via a connection region of the metal electrode layer. In this example, it may therefore be understood that at least part of the layer arrangement (e.g. the metal electrode layer) may be part of the first packaging structure. In some examples, off-the shelf multi-layer packaging materials may be acquired and used.

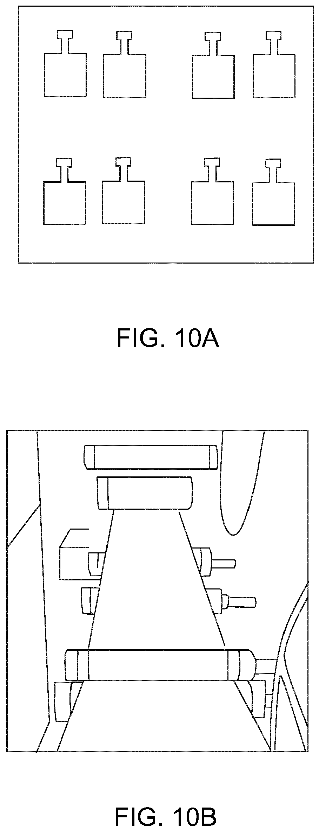

Figs. 10A to 10B show different approaches for forming the metal electrode layers, e.g. copper-based packaging manufacturing. Fig. 10A shows an illustration of screen printed metal ink on a plastic substrate, (e.g. printing copper ink on a plastic substrate). Etched/plated metal (e.g. copper) on a plastic substrate may also be illustrated as such.

Fig. 10B shows using lamination processes using metal foils as an alternative to forming the metal electrode layers by printing and plating (e.g. hot lamination of copper foil and a plastic sheet). The lamination process may thus be used to form a multi-layer packaging, such as a double or triple layer packing.

The lamination process may include die cutting and then laminating the patterned plastic sheets on both sides of the copper foil. The plastic layer may be patterned via die cutting or laser cutting in roll-to-roll fashion where off cuts are collected through an extractor or various ways. The pattern includes a cut/opening to expose the copper underneath where the following layer is directly deposited on. The next layer which is in direct contact with the base metal may be a combination of the following: a corrosion protective metal, a corrosion protective carbon and active material depend on the chemistry and device structure. A further opening may be arranged on either side of the laminate to form the external contacts. The plastic sheets may then be hot/cold laminated onto the metal in roll-to roll fashion which requires a great tension control.

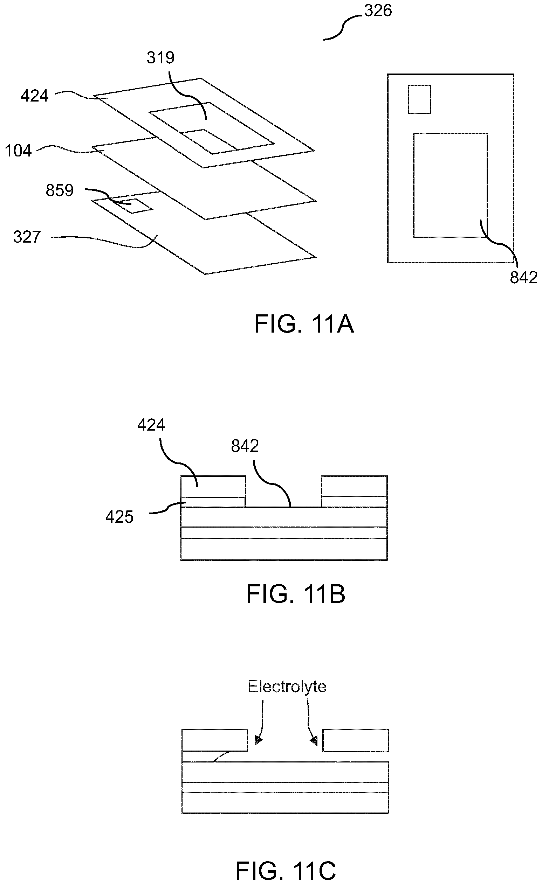

Figs. 11A to 11C show illustrations of a method for forming a packaging structure (e.g. the first packaging structure).

Forming the metal electrode layer 104 of the first packaging structure 326 may include patterning a first plastic layer 424 so that one or more openings 319 are formed in the first plastic layer 424 to form a first patterned plastic sheet. Subsequently, the patterned first plastic layer 424 may be laminated to a first side (or surface) of a metal foil 104 or sheet via an adhesive layer 425, and the metal foil may be exposed (or e.g. uncovered) at the openings formed in the first plastic layer. The exposed metal foil may form the metal electrode layer 104 and may include an exposed main electrode region 842. Forming the packaging structure may further include forming an opening in the second plastic layer 327 (or the first plastic layer 424) so that an external contact region of the metal foil 104 may be exposed. As shown in Fig. 11A, an opening 859 may be formed in the second plastic layer 327 to expose an external contact region of the metal foil 104 at a second surface (opposite to the first surface) of the metal foil.

Fig. 11B shows a cross section of a plastic/metal/plastic laminate packaging. As shown in Fig. 11B, the first plastic layer 424, the metal foil 104 and the second plastic layer 327 may be laminated (or adhered) to each other to create a triple layer packaging (e.g. a plastic/metal/plastic laminate packing structure). The second plastic layer may be laminated to the second opposite surface of the metal foil or sheet, so that the metal foil 104 may thus be sandwiched between the first plastic layer 424 and the second plastic layer 327. In this example, it may also be understood that at least part of the layer arrangement (e.g. the metal electrode layer 104) may be part of the first packaging structure 326.

Fig. 11C shows a cross section of a plastic/metal/plastic laminate packaging where the adhesive is etched through by the electrolyte causing delamination.

As an alternative, to laminating the layers individually, off-the-shelf packaging material manufactured at large scales may be used to form the thin and printed batteries to maintain the total battery cost at a competitive level. Readily available packaging laminates are usually designed and manufactured for the food industry where the focus is on using food grade materials. Although food packaging laminates can be used on many occasions in battery manufacturing, in special cases where the laminate needs to be patterned and then hot laminated new challenges are introduced. When the top plastic layer of an off-the shelf triple layer packaging is patterned to expose the metal underneath for active material deposition, the adhesive which holds the plastic and the metal is also exposed (Fig. 11B). The adhesive used may not be compatible or resistant to the electrolyte used in batteries causing delamination and hence failure of the battery (Fig. 11C). In order to avoid corrosion (as shown in Fig. 11C) of the adhesive layer 425 by the electrolyte to be deposited within the main electrode region 842 (or e.g. in the battery cell region), a sidewall protection structure (e.g. 422) may be formed on sidewalls of the cavity 319 (as shown in Figs. 4A to 4B).

Manufacturing customised packaging material where each component of the laminate is chosen carefully to comply with the battery chemistry increases the unit cost of the battery and hence loses competitiveness in the printed and flexible electronics market. Thus, the sidewall protection structure 422 may be used to protect adhesive layers 425 used in off-the shelf packing materials. For widely used materials (where the adhesive might not be resistant to the electrolyte), the sidewall protection structure 422 (As shown in Figs. 4A to 4B) may be deposited as a frame around the edges of the exposed metal. This may passivate the adhesive between the plastic and the metal to avoid its interaction with the electrolyte and hence eliminating the degradation and delamination.

Optionally, the second plastic layer 327 may be omitted, and the first plastic layer 424 and the metal foil 104 may be laminated together to form a double-layer packaging structure 326. Alternatively, double layer metal/plastic laminate may be used as compared to plastic/metal/plastic laminate. As shown in Figs. 3A to 3B, a top insulating layer 317 may be formed (e.g. by depositing a chemically resistant epoxy) as a part of the packaging. This approach may eliminate the risk of delamination as well as providing a better flexibility over the exposed area pattern design.

Challenges are associated with the use of metal foil-based packaging during die-cutting the fabricated battery into its final shape. One challenge associated with thin and printed battery manufacturing using metal foil current collectors is that the battery may short as soon as it is cut to its final shape after fabrication, due to the metal foils used on both sides contacting each other during punching/cutting. Thus, a robust insulating layer such as adhesion portion 532 may be disposed on the packaging.

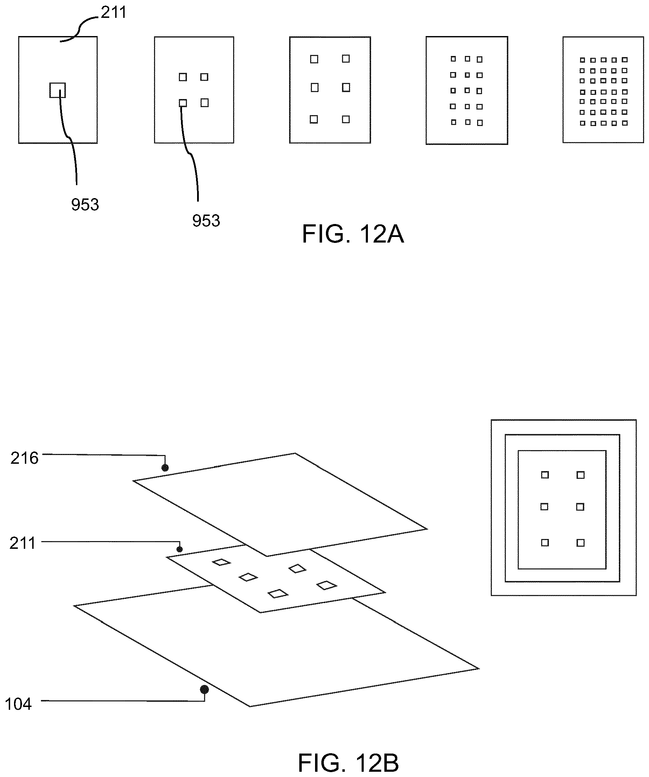

Figs. 12A to 12B show illustrations for forming a protection structure such as the protection layer 205 comprising one or more electrically conductive vias 215 described in Fig. 2C. Forming the protection structure 205 may include depositing a chemically resistant layer 211 and subsequently forming one or more electrically conductive vias, wherein the one or more electrically conductive vias are formed in through-holes extending between the metal electrode layer 104 and the first anode/cathode (shown in Fig. 2C).

As shown in Fig. 12A, one or more through-holes 953 may be formed in a chemically resistant layer 211 (which may be an electrically insulating layer), e.g by printing, die-cutting and/or etching. The pattern of holes may be made into any size and shape depending on the final battery geometry as long as the desired ratio of electrically conductive filler material 212 to chemically resistant layer 211 (by volume) is adhered to. This method reduces the contact area between the metal and the active material in a reproducible way while keeping the total resistance of the battery as low as possible. Also, this approach minimises the risk of corrosion while benefiting fully from the conductivity of the metal. Depending on the conductivity of the active material over the printed area, a single hole (e.g. in the centre) may be sufficient to achieve a desired total resistance while minimising the risk of corrosion. The number of holes can be increased to form a grid like structure across the printed area if necessary. However, this might increase the rate of corrosive electrolyte absorption through the conductive layer filled in the holes and hence may result in shorter shelf life. The holes can be circles or other shapes instead of squares to avoid sharp corners which might acts as corrosion initiation points.

As shown in Fig. 12B, the patterned insulating layer 211 may be deposited or arranged on the metal electrode layer 104, e.g. by screen printing. Subsequently, an electrically conductive layer 216 (e.g. a carbon layer) may be formed on the patterned insulating layer 211 e.g. by screen printing, or spraying or coating over a patterned mask. This method of deposition of a patterned insulating layer with conductive filler on metal is a reproducible approach for a barrier with good corrosion properties. Although the deposition may be done in many ways (spray coating over a masked area), the advantage of screen printing is that this additional step can be easily adapted to our roll-to-roll battery manufacturing line at current line speed.

The printed carbon layer may therefore form one or more electrically conductive vias or paths of (or including) electrically conductive filler material extending between a first side 213 of the chemically resistant layer 211 and the second side 214 of the chemically resistant layer as described in accordance with Fig. 2B. As shown in Fig. 12B, forming the protection structure 205 may include forming the electrically conductive layer 216 on the second side 214 of the chemically resistant layer. In the example of Fig. 12B, the electrically conductive layer 216 may include the same material as the electrically conductive vias. Alternatively, it may be possible for the electrically conductive layer 216 to be of a different material as electrically conductive vias. For example, the electrically conductive layer 216 may include one or more additional sublayers, which may include electrically conductive filler material, a noble metal layer and/or a carbon layer.

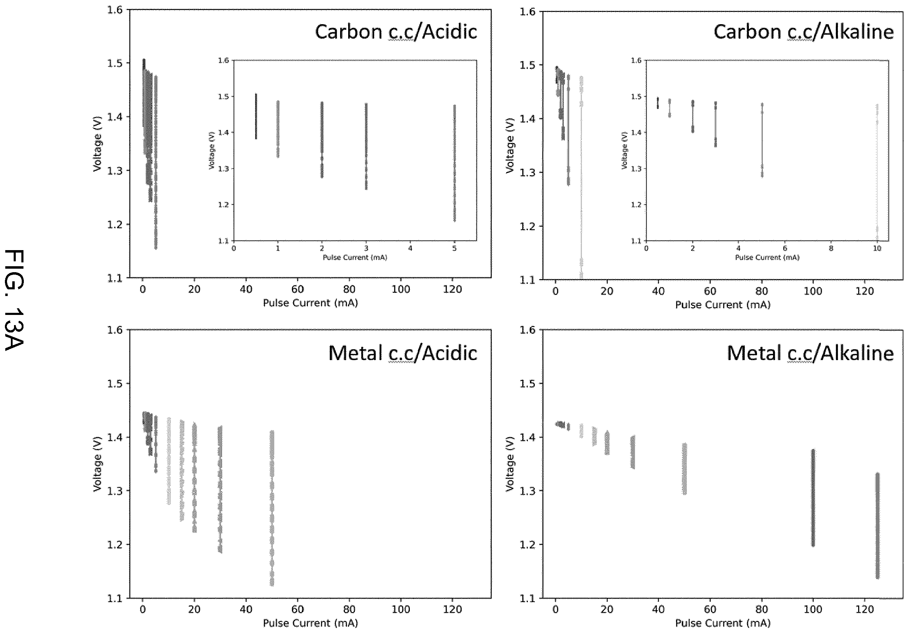

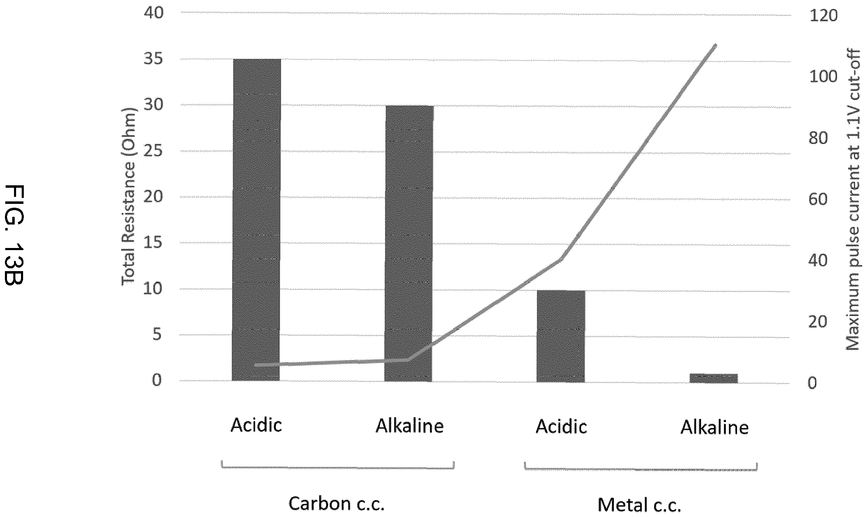

Fig. 13A shows voltage vs pulse current for various battery designs and chemistries. Fig. 13B shows total resistance (Ohm) and maximum pulse current at a cut-off Voltage of 1.1V vs type of battery. This data applies to a single unit cell 1.5V, which can be applied to 3V, i.e., a combination of two-unit cells. The maximum pulse current can be improved from 5mA to 110mA by moving towards metal current collector and alkaline chemistries as shown in Figs. 13A and 13B. The total resistance goes down from 35 - 40 Ohms to 0.5 - 1 Ohm by moving towards metal current collector and alkaline chemistries, compared to a carbon current collector with acidic or alkaline chemistries.

The aspects and features described in relation to a particular one of the previous examples may also be combined with one or more of the further examples to replace an identical or similar feature of that further example or to additionally introduce the features into the further example.

The following examples pertain to further embodiments, from which numerous permutations and configurations will be apparent, and whose scope of subject-matter is defined by the appended claims.

An example is a battery arrangement, including: a first layer arrangement connected to a first anode/cathode of an electrochemically active portion of the battery arrangement, wherein the first layer arrangement comprises a metal electrode layer and a protection structure at least partially arranged between the metal electrode layer and the first anode/cathode, wherein the electrochemically active portion further comprises an electrolytic portion between the first anode/cathode and a second anode/cathode of the electrochemically active portion.

Some examples may include the battery arrangement of example 1, wherein the metal electrode layer comprises copper, and wherein the protection structure comprises a corrosion resistant material.

Some examples may include the battery arrangement of example 1 or 2, wherein the protection structure comprises at least one of a noble metal layer and a carbon layer.

Some examples may include the battery arrangement of example 3, wherein the noble metal layer comprises a tin layer, and wherein the carbon layer comprises at least one of a graphite layer and a graphene layer.

Some examples may include the battery arrangement of any of examples 1 to 4, wherein the protection structure comprises a chemically resistant layer and electrically conductive filler material at least partially in the chemically resistant layer, wherein the electrically conductive filler material provides one or more electrically conductive paths between the metal electrode layer at the first side of the chemically resistant layer and the first anode/cathode at the second side of the chemically resistant layer.

Some examples may include the battery arrangement of example 5, wherein the protection structure comprises one or more electrically conductive vias comprising the electrically conductive filler material, wherein the one or more electrically conductive vias are formed in through-holes extending between the metal electrode layer and the first anode/cathode.

Some examples may include the battery arrangement of examples 5 to 6, wherein the chemically resistant layer comprises electrically conductive filler particles distributed in an electrically insulating layer.

Some examples may include the battery arrangement of any examples 5 to 7, wherein the protection structure comprises an electrically conductive layer formed on the second side of the chemically resistant layer.

Some examples may include the battery arrangement of example 8, wherein the electrically conductive layer comprises at least one of: the electrically conductive filler material, a noble metal layer or a carbon layer.

Some examples may include the battery arrangement of examples 1 to 9, wherein one of the first anode/cathode and second anode/cathode comprises a zinc anode, and wherein the other of the first anode/cathode and second anode/cathode comprises manganese dioxide cathode or silver oxide cathode, or
wherein one of the first anode/cathode and second anode/cathode comprises a nickel anode, and wherein the other of the first anode/cathode and second anode/cathode comprises a metal-hydride cathode.

Some examples may include the battery arrangement of examples 1 to 10, wherein the protection structure comprises:
an electrically insulating portion formed on the metal electrode layer;
a cavity arranged in the electrically insulating portion; and
a sidewall protection structure formed on sidewalls of the cavity,
wherein the electrochemically active portion is arranged in the cavity.

Some examples may include the battery arrangement of example 11, wherein the electrically insulating portion comprises at least part of an adhesion portion for joining a first packaging structure arranged at a first side of the battery arrangement to a second packaging structure arranged at a second side of the battery arrangement.

Some examples may include the battery arrangement of example 11 or 12, wherein the electrically insulating portion wherein the electrically insulating portion comprises a plastic layer and an adhesive layer.

Some examples may include the battery arrangement of examples 1 to 13, further comprising a packaging arrangement, wherein the packaging arrangement comprises:
a first packaging structure arranged at a first side of the electrochemically active portion; and
a second packaging structure arranged at a second side of the electrochemically active portion,
wherein first packaging structure and the second packaging structure are joined to each other around the electrochemically active portion.

Some examples may include the battery arrangement of example 14, wherein the first packaging structure is arranged at a side of the first layer arrangement opposite to the electrochemically active portion, and
wherein the second packaging structure is arranged at a side of a second layer arrangement connected to the second anode/cathode.

Some examples may include the battery arrangement of example 14 or 15, comprising an adhesion portion joining the first packaging structure to the second packaging structure, wherein a thickness of the adhesion portion is greater than 50 % of a thickness of the battery arrangement.

Some examples may include the battery arrangement of example 16, wherein a thickness of the adhesion portion is between 50 % and 120 % of a thickness of the battery arrangement.

Some examples may include the battery arrangement of any of examples 13 to 17, wherein the metal electrode layer is at least one of printed, plated and laminated onto the first packaging structure.

Some examples may include the battery arrangement of any of examples 13 to 18, wherein the first packaging structure comprises a plastic substrate,
wherein the metal electrode layer comprises metal ink printed onto at least part of the plastic substrate, or
wherein the metal electrode layer comprises metal plated onto at least part of the plastic substrate.

Some examples may include the battery arrangement of any of examples 13 to 19, wherein the first packaging structure comprises a plastic layer comprising at least one opening, wherein the metal electrode layer comprises a layer of metal foil, and wherein the plastic layer is laminated to a first side of the metal foil.

Some examples may include the battery arrangement of example 20, wherein the protection structure is disposed on the plastic layer, wherein the metal electrode layer is connected to the protection structure at the at least one opening.

Some examples may include the battery arrangement of example 20 or 21, wherein the first packaging layer further comprises a second plastic layer laminated to a second side of the metal electrode layer.

Some examples may include the battery arrangement of any of examples 13 to 22, wherein the second package layer structure comprises at least one of a laminate structure and a plastic substrate.

Some examples may include the battery arrangement of any of examples 1 to 23, further comprising a second layer arrangement, wherein the second layer arrangement comprises a second metal electrode layer and a second protection structure arranged between the second metal electrode layer and the second anode/cathode.

Some examples may include the battery arrangement of any of examples 1 to 24, wherein the battery arrangement comprises a thin-film battery package.

Another example is a method for forming a battery arrangement. The method comprises: forming a first layer arrangement of a battery arrangement, wherein forming the first layer arrangement comprises forming a protection structure on a metal electrode layer of the first layer arrangement, and forming an electrochemically active portion of the battery arrangement on the protection structure, wherein the electrochemically active portion comprises a first anode/cathode, a second anode/cathode, and an electrolytic portion between the first anode/cathode and the second anode/cathode.

Some examples may include the method of example 26, further comprising forming the metal electrode layer on a first packaging structure, wherein forming the metal electrode layer comprises at least one of printing, plating and laminating the metal electrode on the first packing layer structure.

Some examples may include the method of any of examples 26 to 27, wherein forming the protection structure comprises forming at least one of a noble metal layer and a carbon layer on the metal electrode layer.

Some examples may include the method of any of examples 26 to 28, wherein forming the protection structure comprises: depositing a chemically resistant layer; forming one or more electrically conductive vias comprising the electrically conductive filler material, wherein the one or more electrically conductive vias are formed in through-holes extending between the metal electrode layer and the first anode/cathode.

Some examples may include the method of example 29, wherein forming the protection structure further comprises forming an electrically conductive layer on the second side of the chemically resistant layer, wherein the electrically conductive layer comprises the electrically conductive filler material, a noble metal layer or a carbon layer.

Some examples may include the method of any of examples 26 to 30, wherein forming the protection structure comprises: forming an electrically insulating portion on a surface of the metal electrode layer; forming a cavity in the electrically insulating portion and exposing the metal electrode layer; and forming a sidewall protection structure on sidewalls of the cavity, wherein the electrochemically active portion is formed in the cavity.

Some examples may include the method of any of examples 26 to 31, further comprising: forming a second protection structure on the second anode/cathode; forming a second metal electrode layer on a second packaging structure; and joining the first packaging structure to the second packaging structure using an adhesion portion formed around the edge region of the battery package, wherein a thickness of the adhesion portion is greater than 50% of a thickness of the battery arrangement.

Some examples may include the method of example 32, wherein the second package layer structure comprises at least one of a laminate structure and a plastic substrate.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several substeps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended.

Furthermore, features of a claim should also be included for any other independent claim, even if that claim is not directly defined as dependent on that other independent claim.

## Claims

1. A battery arrangement (100, 200, 300, 400, 500, 600, 800, 900), comprising:
a first layer arrangement (101) connected to a first anode/cathode (102) of an electrochemically active portion (103) of the battery arrangement (100, 200, 300, 400, 500, 600, 800, 900),
wherein the first layer arrangement (101) comprises a metal electrode layer (104) and a protection structure (105, 205, 305, 405) at least partially arranged between the metal electrode layer (104) and the first anode/cathode (102),
wherein the electrochemically active portion (103) further comprises an electrolytic portion (106) between the first anode/cathode (102) and a second anode/cathode (107) of the electrochemically active portion (103).

2. The battery arrangement of claim 1, wherein the protection structure (105, 205, 305, 405) comprises a corrosion resistant material for protecting the metal electrode layer (104) from chemical corrosion by the electrolytic portion (103).

3. The battery arrangement of claim 1 or 2, wherein the protection structure (105, 205, 305, 405) comprises at least one of a layer (208, 209) comprising a noble metal and a layer comprising carbon.

4. The battery arrangement of claim 3, wherein the layer (208, 209) comprising the noble metal comprises a tin layer, and wherein the layer comprising carbon comprises at least one of a graphite layer and a graphene layer.

5. The battery arrangement of any of claims 1 to 4, wherein the metal electrode layer (104) comprises copper.

6. The battery arrangement of any of claims 1 to 5, wherein the protection structure (105, 205, 305, 405) comprises a chemically resistant layer (211) and electrically conductive filler material (212) at least partially in the chemically resistant layer (211),
wherein the electrically conductive filler material (212) provides one or more electrically conductive paths between the metal electrode layer (104) at the first side (213) of the chemically resistant layer (211) and the first anode/cathode (102) at the second side (214) of the chemically resistant layer (211).

7. The battery arrangement of any of claims 1 to 6, wherein the protection structure (105, 205, 305, 405) comprises one or more electrically conductive vias (215) comprising electrically conductive filler material (212), wherein the one or more electrically conductive vias (215) are formed in through-holes extending between the metal electrode layer (104) and the first anode/cathode (102).

8. The battery arrangement of any claims 6 or 7, wherein the protection structure (105, 205, 305, 405) comprises an electrically conductive layer (216) formed on the second side (214) of the chemically resistant layer (211).

9. The battery arrangement of any of claims 1 to 8, wherein one of the first anode/cathode (102) and second anode/cathode (107) comprises a zinc anode, and wherein the other of the first anode/cathode (102) and second anode/cathode (107) comprises manganese dioxide cathode or silver oxide cathode, or
wherein one of the first anode/cathode (102) and second anode/cathode (107) comprises a nickel anode, and wherein the other of the first anode/cathode (102) and second anode/cathode (107) comprises a metal-hydride cathode.

10. The battery arrangement of any of claims 1 to 9, wherein the protection structure (105, 205, 305, 405) comprises:
an electrically insulating portion (317, 417) formed on the metal electrode layer (104);
a cavity (319) arranged in the electrically insulating portion (317, 417); and
a sidewall protection structure (422) formed on sidewalls (423) of the cavity (319), wherein the electrochemically active portion (103) is arranged in the cavity (319).

11. The battery arrangement of any of claims 1 to 10, further comprising:
a first packaging structure (326) arranged at a first side of the electrochemically active portion (103); and
a second packaging structure (529) arranged at a second side of the electrochemically active portion (103),
wherein first packaging structure (326) and the second packaging structure (529) are joined to each other around the electrochemically active portion (103).

12. The battery arrangement of claim 11, comprising an adhesion portion (532) joining the first packaging structure (326) to the second packaging structure (529), wherein a thickness of the adhesion portion is greater than 50 % of a thickness of the battery arrangement.

13. A method (700) for forming a battery arrangement, the method comprising:
forming (710) a first layer arrangement of a battery arrangement, wherein forming the first layer arrangement comprises forming a protection structure on a metal electrode layer of the first layer arrangement, and
forming (720) an electrochemically active portion of the battery arrangement on the protection structure, wherein the electrochemically active portion comprises a first anode/cathode, a second anode/cathode, and an electrolytic portion between the first anode/cathode and the second anode/cathode.

14. The method of claim 13, wherein forming the protection structure comprises forming at least one of a noble metal layer and a carbon layer on the metal electrode layer.

15. The method of any of claims 13 to 14, wherein forming the protection structure comprises:
depositing a chemically resistant layer;
forming one or more electrically conductive vias comprising electrically conductive filler material, wherein the one or more electrically conductive vias are formed in through-holes extending between the metal electrode layer and the first anode/cathode.
